# EUROPEAN PATENT APPLICATION

(11) **EP 1 588 767 A2**
(43) Date of publication of application: **26.10.2005**
(21) Application number: 05252450.1
(22) Date of filing: 19.04.2005
(51) Int. Cl.: B01L 3/02, B01J 19/00

(54) **Chemical arrays and methods of producing the same**

(30) Priority: 19.04.2004 US 828357
(71) Applicant: Agilent Technologies Inc, Palo Alto, CA 94306-2024 (US)
(72) Inventor: Peck, Bill J, Mountain View CA 9443 (US); LeProust, Eric M, San Jose CA 95125 (US); Adaskin, David R, San Jose CA 95118 (US); Chen, Guang, San Jose CA 95129 (US); Chesk, Williams G, San Jose CA 95124 (US); Schremp, Donald J, San Jose CA 95124 (US); Woods, Stanley P, Cupertino CA 95014 (US)
(74) Representative: Jehan, Robert

(57) **Abstract**

Methods and devices for fabricating a chemical array are provided. Embodiments include determining a chemical array layout in which each feature in the layout has a size that is chosen based on its composition and fabricating a chemical array according to the chemical array layout. In certain embodiments, at least two features of an array fabricated according to the subject methods are of different sizes. Embodiments also include chemical arrays (112) having features (116) of different sizes, e.g., fabricated according to the subject methods. Also provided are embodiments that include fluid deposition devices capable of fabricating chemical arrays having features of different sizes, e.g., for use in practicing the subject methods. Algorithms present on computer readable mediums for use in practicing the subject methods may also be provided in certain embodiments. Embodiments may also include systems and kits for use in practicing the subject methods.

## Description

The present invention relates to chemical arrays.

Chemical arrays such as biopolymer arrays (for example polynucleotide array such as DNA or RNA arrays), are arrays of binding agents (ligands) and are known and are used, for example, as diagnostic or screening tools, including, but not limited to, gene expression analysis, drug screening, nucleic acid sequencing, mutation analysis, and the like. These binding agent or ligand arrays include a plurality of binding agents positioned on a solid support surface in the form of an array or pattern.

Where the ligands of the arrays are polymeric, e.g., as is the case with nucleic acid and polypeptide arrays, there are two main ways of producing such arrays, i.e., via in-situ synthesis in which the polymeric ligand is grown on the surface of the substrate in a stepwise fashion and via deposition of the full ligand, e.g., a pre-synthesized nucleic acid/polypeptide, cDNA fragment, etc., onto the surface of the array.

In many instances, it may be desirable for an array to have features of different sizes. Of particular interest would be the ability to fabricate such arrays in a high-throughput manner.

Accordingly, there continues to be an interest in the development of methods and devices capable of fabricating a biopolymeric array with features of different sizes, i.e., that enable control of the size of each feature of an array, e.g., in a high throughput manner. Of particular interest are such methods and devices that enable control of each feature on a per probe basis.

The present invention seeks to provide improved methods and devices for fabricating a chemical array.

According to an aspect of the present invention, there is provided a method of fabricating a chemical array as specified in claim 1.

According to another aspect of the present invention, there is provided a method of fabricating a chemical array as specified in claim 7.

According to another aspect of the present invention, there is provided apparatus for fabricating a chemical array as specified in claim 12.

Embodiments include determining a chemical array layout in which each feature in the layout has a size that is chosen based on its composition and fabricating a chemical array according to the chemical array layout. In certain embodiments, at least two features of an array fabricated according to the subject methods are of different sizes.

Embodiments also include chemical arrays having features of different sizes, e.g., fabricated according to the subject methods. Also provided are embodiments that include fluid deposition devices capable of fabricating chemical arrays having features of different sizes, e.g., for use in practicing the subject methods. Algorithms present on computer readable mediums for use in practicing the subject methods may also be provided in certain embodiments. Embodiments may also include systems and kits for use in practicing the subject methods.

Embodiments of the present invention are described below, by way of example only, with reference to the accompanying drawings, in which:
Figure 1 shows an exemplary embodiment of a waveform that may be employed in the practice of the preferred methods.
Figure 2 shows a block diagram of an exemplary embodiment of the subject invention.
Figure 3 shows an exemplary embodiment of an apparatus which may be employed in the practice of the described methods.
Figure 4 shows an exemplary embodiment of an array reader which may be employed to read arrays.
Figure 5 shows an exemplary embodiment of an array assembly that may be produced according to the described methods.
Figure 6 shows an enlarged view of a portion of Figure 8 showing spots or features of differing sizes.
Figures 7 and 8 show exemplary embodiments of array patterns having features of different sizes.

### Definitions

A "biopolymer" is a polymer of one or more types of repeating units. Biopolymers are typically found in biological systems and include, but are not limited to, polysaccharides (such as carbohydrates), and peptides (which term is used to include polypeptides, and proteins whether or not attached to a polysaccharide) and polynucleotides as well as their analogs, such as those compounds composed of or containing amino acid analogs or non-amino acid groups, or nucleotide analogs or non-nucleotide groups. This includes polynucleotides in which the conventional backbone has been replaced with a non-naturally occurring or synthetic backbone, and nucleic acids (or synthetic or naturally occurring analogs) in which one or more of the conventional bases has been replaced with a group (natural or synthetic) capable of participating in Watson-Crick type hydrogen bonding interactions or Wobble interactions. Polynucleotides include single or multiple stranded configurations, where one or more of the strands may or may not be completely aligned with another. A "nucleotide" refers to a sub-unit of a nucleic acid and has a phosphate group, a 5 carbon sugar and a nitrogen containing base, as well as functional analogs (whether synthetic or naturally occurring) of such sub-units which in the polymer form (as a polynucleotide) can hybridize with naturally occurring polynucleotides in a sequence specific manner analogous to that of two naturally occurring polynucleotides. For example, a "biopolymer" includes DNA (including cDNA), RNA, oligonucleotides, and PNA and other polynucleotides as described in US 5,948,902 and references cited therein (all of which are incorporated herein by reference), regardless of the source. An "oligonucleotide" generally refers to a nucleotide multimer of about 10 to 100 nucleotides in length, while a "polynucleotide" includes a nucleotide multimer having any number of nucleotides.

A "biomonomer" references a single unit, which can be linked with the same or other biomonomers to form a biopolymer (for example, a single amino acid or nucleotide with two linking groups one or both of which may have removable protecting groups). A biomonomer fluid or biopolymer fluid reference a liquid containing either a biomonomer or biopolymer, respectively (typically in solution).

A chemical "array", unless a contrary intention appears, includes any one, two or three-dimensional arrangement of addressable regions bearing a particular chemical moiety or moieties (for example, biopolymers such as polynucleotide sequences) associated with that region. Each region may extend into a third dimension in the case where the substrate is porous while not having any substantial third dimension measurement (thickness) in the case where the substrate is non-porous. An array is "addressable" in that it has multiple regions of different moieties (for example, different polynucleotide sequences) such that a region (a "feature" or "spot" of the array) at a particular predetermined location (an "address") on the array will detect a particular target or class of targets (although a feature may incidentally detect non-targets of that feature). Any given substrate may carry one, two, four or more arrays disposed on a front surface of the substrate. Depending upon the use, any or all of the arrays may be the same or different from one another and each may contain multiple spots or features.

An array may contain one or more, including more than two, more than ten, more than one hundred, more than one thousand, more ten thousand features, or even more than one hundred thousand features, in an area of less than 20 cm² or even less than 10 cm², e.g., less than about 5 cm², including less than about 1 cm², less than about 1 mm², e.g., 100 µ², or even smaller. In certain embodiments, an array may cover an area as great as about 230 cm² or more, e.g., as great as about 930 cm² or more. By "feature" or "spot", used interchangeably, is meant a polymer, i.e., binding agent, present as a composition of multiple copies of the polymer on an array substrate surface. The multiple copies may be in any shape, including round and non-round shapes.

For example, features may have widths (that is, diameter, for a round spot) in the range from about 10 µm to about 1.0 cm. In other embodiments each feature may have a width in the range of about 1.0 µm to about 1.0 mm, usually about 5.0 µm to about 500 µm, and more usually about 10 µm to about 200 µm. Non-round features may have area ranges equivalent to that of circular features with the foregoing width (diameter) ranges. At least some, or all, of the features are of different compositions (for example, when any repeats of each feature composition are excluded the remaining features may account for at least 5%, 10%, 20%, 50%, 95%, 99% or 100% of the total number of features). Inter-feature areas will typically (but not essentially) be present which do not carry any nucleic acids (or other biopolymer or chemical moiety of a type of which the features are composed). It will be appreciated though, that the inter-feature areas, when present, could be of various sizes and configurations.

Each array may cover an area of less than 200 cm², or even less than 50 cm², 5 cm², 1 cm², 0.5 cm², or 0.1 cm². In certain embodiments, the substrate carrying the one or more arrays will be shaped generally as a rectangular solid (although other shapes are possible), having a length of more than 4 mm and less than 150 mm, usually more than 4 mm and less than 80 mm, more usually less than 20 mm; a width of more than 4 mm and less than 150 mm, usually less than 80 mm and more usually less than 20 mm; and a thickness of more than 0.01 mm and less than 5.0 mm, usually more than 0.1 mm and less than 2 mm and more usually more than 0.2 and less than 1.5 mm, such as more than about 0.8 mm and less than about 1.2 mm. With arrays that are read by detecting fluorescence, the substrate may be of a material that emits low fluorescence upon illumination with the excitation light. Additionally in this situation, the substrate may be relatively transparent to reduce the absorption of the incident illuminating laser light and subsequent heating if the focused laser beam travels too slowly over a region. For example, the substrate may transmit at least 20%, or 50% (or even at least 70%, 90%, or 95%), of the illuminating light incident on the front as may be measured across the entire integrated spectrum of such illuminating light or alternatively at 532 nm or 633 nm. In certain embodiments, the substrate may include a mirrored surface.

In the case of an array, the "target" will be referenced as a moiety in a mobile phase (typically fluid), to be detected by probes ("target probes") which are bound to the substrate at the various regions. However, either of the "target" or "target probes" may be the one which is to be evaluated by the other (thus, either one could be an unknown mixture of polynucleotides to be evaluated by binding with the other).

An "array layout" or "array characteristics", refer to one or more physical, chemical or biological characteristics of the array, such as feature positioning, one or more feature dimensions such as feature size, density, and the like, some indication of an identity or function (for example, chemical or biological) of a moiety at a given location, how the array should be handled (for example, conditions under which the array is exposed to a sample, or array reading specifications or controls following sample exposure), and the like.

The term "hybridization" as used herein refers to binding between complementary or partially complementary molecules, for example as between the sense and anti-sense strands of double-stranded DNA. Such binding is commonly non-covalent binding, and is specific enough that such binding may be used to differentiate between highly complementary molecules and others less complementary. Examples of highly complementary molecules include complementary oligonucleotides, DNA, RNA, and the like, which comprise a region of nucleotides arranged in the nucleotide sequence that is exactly complementary to a probe; examples of less complementary oligonucleotides include ones with nucleotide sequences comprising one or more nucleotides not in the sequence exactly complementary to a probe oligonucleotide. "Hybridizing" and "binding", with respect to polynucleotides, are used interchangeably.

An "array assembly" may be one or more arrays plus only a substrate on which the one or more arrays are deposited, although the assembly may be in the form of a package which includes other elements (such as a housing with a chamber). Specifically, an array assembly at least includes a substrate having at least one array thereon.

When one item is indicated as being "remote" from another, this is referenced that the two items are at least in different buildings, and may be at least one mile, ten miles, or at least one hundred miles apart. "Communicating" information references transmitting the data representing that information as electrical signals over a suitable communication channel (for example, a private or public network). "Forwarding" an item refers to any means of getting that item from one location to the next, whether by physically transporting that item or otherwise (where that is possible) and includes, at least in the case of data, physically transporting a medium carrying the data or communicating the data.

A "chamber" references an enclosed volume (although a chamber may be accessible through one or more ports).

It will also be appreciated that throughout the present application, that words such as "front", "back", "top", "upper", and "lower" are used in a relative sense only.

"Fluid" is used herein to reference a liquid.

"May" refers to optionally. Any recited method can be carried out in the ordered sequence of events as recited, or any other logically possible sequence. "Optional" or "optionally" means that the subsequently described circumstance may or may not occur, so that the description includes instances where the circumstance occurs and instances where it does not.

A "fluid drop deposition device" and analogous terms refers broadly to any device which can dispense drops in the formation of an array and includes, but is not limited to, pulse jet devices. "Pulse jets" operate by delivering a pulse of pressure (such as by a piezoelectric or thermoelectric element) to liquid adjacent an outlet or orifice such that a drop will be dispensed therefrom.

"Continuous" in reference to an area on the substrate surface references an area which is uninterrupted by any gaps within that area. The distinct features of an array may then be formed on such a continuous area.

"Probe density" is a shorthand way of referring to the number of linker molecules or probe molecules per unit area within a feature. This term then is used interchangeably with, and has the same meaning as "feature probe density". Thus, any interfeature areas which are essentially devoid of the probe are not taken into consideration in determining a probe density. "Probe density" in a region then, is distinct and independent of feature density (which is the number of features per unit area).

Different feature sizes with respect to the sizes of at least two features refers to sizes of the referenced features that differ by more than about 1% or more, e.g., more than about 5%, e.g., more than 10%, 15%, 20% or 50% or more. By "feature size" is meant a characteristic length scale of a feature. For example, a characteristic length scale may be width (diameter for a round feature) or the like.

The terms "target" "target molecule" "target biomolecule" and "analyte" are used herein interchangeably and refer to a known or unknown molecule in or suspected of being in a sample. A target is one that will bind, e.g., hybridize, to a probe on a substrate surface if the target molecule and the molecular probe are complementary, e.g., if they contain complementary regions, i.e., if they are members of a specific binding pair.
The term "probe" as used herein refers to a molecule of known identity adherent to a substrate.

"Probe copies" refers to exact copies of a given probe.

The term "hybridization solution" or "hybridization reagent" used herein interchangeably refers to a solution suitable for use in a hybridization reaction.

A "linking layer" bound to the surface may, for example, be less than 200 angstroms or even less than 10 angstroms in thickness (or less than 8, 6, or 4 angstroms thick). Such layer may have a polynucleotide, protein, nucleoside or amino acid minimum binding affinity of 10⁴ to 10⁶ units/µ². Layer thickness may be evaluated using UV or X-ray elipsometry.

The term "stringent assay conditions" as used herein refers to conditions that are compatible to produce binding pairs of nucleic acids, e.g., surface bound and solution phase nucleic acids, of sufficient complementarity to provide for the desired level of specificity in the assay while being less compatible to the formation of binding pairs between binding members of insufficient complementarity to provide for the desired specificity. Stringent assay conditions are the summation or combination (totality) of both hybridization and wash conditions.

A "stringent hybridization" and "stringent hybridization wash conditions" in the context of nucleic acid hybridization (e.g., as in array, Southern or Northern hybridizations) are sequence dependent, and are different under different experimental parameters. Stringent hybridization conditions that can be used to identify nucleic acids within the scope of the invention can include, e.g., hybridization in a buffer comprising 50% formamide, 5×SSC, and 1 % SDS at 42°C, or hybridization in a buffer comprising 5×SSC and 1% SDS at 65°C, both with a wash of 0.2×SSC and 0.1% SDS at 65°C. Exemplary stringent hybridization conditions can also include a hybridization in a buffer of 40% formamide, 1M NaCl, and 1% SDS at 37°C, and a wash in 1 × SSC at 45°C. Alternatively, hybridization to filter-bound DNA in 0.5 M NaHPO4, 7% sodium dodecyl sulfate (SDS), 1 mM EDTA at 65°C, and washing in 0.1×SSC/0.1% SDS at 68°C can be employed. Yet additional stringent hybridization conditions include hybridization at 60°C or higher and 3 × SSC (450 mM sodium chloride/45 mM sodium citrate) or incubation at 42°C in a solution containing 30% formamide, 1M NaCl, 0.5% sodium sarcosine, 50 mM MES, pH 6.5. Those of ordinary skill will readily recognize that alternative but comparable hybridization and wash conditions can be utilized to provide conditions of similar stringency.

In certain embodiments, the stringency ofthe wash conditions that set forth the conditions which determine whether a nucleic acid is specifically hybridized to a surface bound nucleic acid. Wash conditions used to identify nucleic acids may include, e.g.: a salt concentration of about 0.02 molar at pH 7 and a temperature of at least about 50°C or about 55°C to about 60°C; or, a salt concentration of about 0.15 M NaCl at 72°C for about 15 minutes; or, a salt concentration of about 0.2×SSC at a temperature of at least about 50°C or about 55°C to about 60°C for about 15 to about 20 minutes; or, the hybridization complex is washed twice with a solution with a salt concentration of about 2×SSC containing 0.1% SDS at room temperature for 15 minutes and then washed twice by 0.1×SSC containing 0.1 % SDS at 68°C for 15 minutes; or, equivalent conditions. Stringent conditions for washing can also be, e.g., 0.2×SSC/0.1% SDS at 42°C.

A specific example of stringent assay conditions is rotating hybridization at 65°C in a salt based hybridization buffer with a total monovalent cation concentration of 1.5 M (e.g., as described in U.S. Patent Application No. 09/655,482 filed on September 5, 2000, the disclosure of which is herein incorporated by reference) followed by washes of 0.5X SSC and 0.1 X SSC at room temperature.

Stringent assay conditions are hybridization conditions that are at least as stringent as the above representative conditions, where a given set of conditions are considered to be at least as stringent if substantially no additional binding complexes that lack sufficient complementarity to provide for the desired specificity are produced in the given set of conditions as compared to the above specific conditions, where by "substantially no more" is meant less than about 5-fold more, typically less than about 3-fold more. Other stringent hybridization conditions are known in the art and may also be employed, as appropriate.

The term "ligand" as used herein refers to a moiety that is capable of covalently or otherwise chemically binding a compound of interest. Ligands may be naturally-occurring or manmade. Examples of ligands include, but are not restricted to, agonists and antagonists for cell membrane receptors, toxins and venoms, viral epitopes, hormones, opiates, steroids, peptides, enzyme substrates, cofactors, drugs, lectins, sugars, oligonucleotides, nucleic acids, oligosaccharides, and proteins.

The term "receptor" as used herein is a moiety that has an affinity for a ligand. Receptors may be naturally-occurring or manmade. They may be employed in their unaltered state or as aggregates with other species. Receptors may be attached, covalently or noncovalently, to a binding member, either directly or via a specific binding substance. Examples of receptors include, but are not restricted to, antibodies, cell membrane receptors, monoclonal antibodies and antisera reactive with specific antigenic determinants, viruses, cells, drugs, polynucleotides, nucleic acids, peptides, cofactors, lectins, sugars, polysaccharides, cellular membranes, and organelles. Receptors are sometimes referred to in the art as anti-ligands. As the term receptors is used herein, no difference in meaning is intended. A "Ligand Receptor Pair" is formed when two molecules have combined through molecular recognition to form a complex.

The term "sample" as used herein relates to a material or mixture of materials, typically, although not necessarily, in fluid form, containing or suspected of containing one or more components (targets) of interest.

A "computer-based system" refers to the hardware means, software means, and data storage means used to analyze the information obtained. The minimum hardware of preferred computer-based systems include a central processing unit (CPU), input means, output means, and data storage means. A skilled artisan can readily appreciate that any one of the currently available computer-based system are suitable for use in implementing the methods taught herein. The data storage means may include any manufacture comprising a recording of the present information as described above, or a memory access means that can access such a manufacture.

To "record" data, programming or other information on a computer readable medium refers to a process for storing information, using any such methods as known in the art. Any convenient data storage structure may be chosen, based on the means used to access the stored information. A variety of data processor programs and formats may be used for storage, e.g. word processing text file, database format, etc.

A "processor" references any hardware and/or software combination that will perform the functions required of it. For example, any processor herein may be a programmable digital microprocessor such as available in the form of an electronic controller, mainframe, server or personal computer (desktop or portable). Where the processor is programmable, suitable programming can be communicated from a remote location to the processor, or previously saved in a computer program product (such as a portable or fixed computer readable storage medium, whether magnetic, optical or solid state device based). For example, a magnetic medium or optical disk may carry the programming, and can be read by a suitable reader communicating with each processor at its corresponding station.

"Activation signal" refers to the electrical or other analogous energy provided to an ejector to activate the ejector.

"Waveform" refers to the shape of an activation signal which may be illustrated graphically by plotting the values of voltage against time.

### Detailed Description

Methods and devices for fabricating a chemical array are disclosed. Embodiments of the subject methods include determining a chemical array layout in which each feature in the layout has a size that is chosen based on its composition and fabricating a chemical array according to the chemical array layout. In certain embodiments, at least two features of an array fabricated according to the subject methods are of different sizes.

Embodiments also include chemical arrays having features of different sizes, e.g., fabricated according to the described methods. Also provided are embodiments that include fluid deposition devices capable of fabricating chemical arrays having features of different sizes, e.g., for use in practicing the subject methods. Algorithms present on computer readable mediums for use in practicing the subject methods may also be provided in certain embodiments. Embodiments may also include systems and kits for use in practicing the subject methods.

Before the preferred embodiments are, it is to be understood that the claims are not limited to particular embodiments described, as such may, of course, vary. It is also to be understood that the terminology used herein is for the purpose of describing particular embodiments only, and is not intended to be limiting to the claims.

Where a range of values is provided, it is understood that each intervening value, to the tenth of the unit of the lower limit unless the context clearly dictates otherwise, between the upper and lower limit of that range and any other stated or intervening value in that stated range, is encompassed within the claims. The upper and lower limits of these smaller ranges may independently be included in the smaller ranges is also encompassed within the claims, subject to any specifically excluded limit in the stated range. Where the stated range includes one or both of the limits, ranges excluding either or both of those included limits are also included in the claims.

Unless defined otherwise, all technical and scientific terms used herein have the same meaning as commonly understood by one of ordinary skill in the art in the field to which this invention belongs. Although any methods and materials similar or equivalent to those described herein can also be used in the practice or testing ofthe teachings herein, the preferred methods and materials are now described. All publications mentioned herein are incorporated herein by reference to disclose and describe the methods and/or materials in connection with which the publications are cited.

It must be noted that as used herein and in the appended claims, the singular forms "a", "an", and "the" include plural referents unless the context clearly dictates otherwise.

As will be apparent to those of skill in the art upon reading this disclosure, each of the individual embodiments described and illustrated herein has discrete components and features which may be readily separated from or combined with the features of any of the other several embodiments without departing from the scope of the claims.

The Figures herein are not necessarily drawn to scale, with some components and features being exaggerated for clarity.

### Methods of Producing a Chemical Array

As noted above, embodiments include methods for fabricating a chemical array such as a biopolymeric array. Specifically, the preferred methods for fabricating a chemical array enable precise control over the sizes of each feature of the chemical array. Accordingly, chemical arrays may be fabricated having one or more features, including all of the features, of different sizes. In certain embodiments, features of differing sizes may be adjacent each other, e.g., in the same column or row of the array, such that there are not intervening features therebetween. In certain embodiments, fluid for fabricating different sized features of an array may be dispensed from the same orifice of a drop deposition apparatus, e.g., adjacent features. For example, the amount of fluid dispensed from an orifice of a drop deposition device may be changed, e.g., by modulating the activation signal provided to the orifice ejector associated with the orifice, during the fabrication process without disruption of the fabrication process, to dispense different volumes of fluid from the orifice, thereby fabricating features of different sizes from the same orifice.

As noted above and which will be described in greater detail below, the chemical arrays are, in the broadest sense, arrays of polymeric or biopolymeric ligands or molecules, i.e., binding agents or probes, where the polymeric binding agents may be any of: peptides, proteins, nucleic acids, polysaccharides, synthetic mimetics of such biopolymeric binding agents, etc. In many embodiments of interest, the arrays are arrays of nucleic acids, including oligonucleotides, polynucleotides, cDNAs, mRNAs, synthetic mimetics thereof, and the like. As described in greater detail below, the chemical arrays of the disclosed system may be employed in array assays, e.g., hybridization assays, in which the arrays are contacted with a sample containing, or suspected of containing, one or more targets of interest. Once contacted, and further processed if required, any probe/target binding complexes present on the array may be detected to provide information about the presence of the one or more targets in the sample.

In general, the preferred methods employ a fluid deposition device that includes at least one deposition head (printhead) having at least one reservoir associated with at least one orifice (also referred to as a nozzle), through which fluid is ejected. An orifice of the deposition head includes an ejector, which, when activated, causes fluid (e.g., probe precursor (e.g., phosphoramidite), activator fluid (e.g., tetrazole activator) and the like) to be expelled from the orifice onto an array substrate.

Embodiments of the preferred methods include controlling the amount of fluid (i.e., the droplet size) dispensed from the one or more orifices of the deposition head, e.g., by modulating the applied activation signal provided to each respective ejector, e.g., prior to each ejection of fluid from the deposition head, wherein the activation signal provided to an ejector is directly related to the amount of fluid ejected from a respective orifice and thus is directly related to the size of each feature. Embodiments include modulating the applied waveform provided to each ejector to control the amount of fluid dispensed from the one or more orifices.

It is to be understood that the term "modulation" is used herein broadly. For example, modulation of, e.g., an applied activation signal, may be with respect to amplitude, pulse length, frequency, and the like.

Embodiments include modulating an applied voltage to each ejector, thus enabling the adjustment of the volume of fluid delivered from a deposition head for each array feature, i.e., provide dynamic fluid volume adjustments. In many embodiments, a deposition head employed in the practice of the subject methods includes a plurality of reservoirs and corresponding orifices, each orifice having a respective ejector. Accordingly, embodiments include controlling the amount of fluid dispensed from each orifice of the deposition head, e.g., by modulating the applied activation signal to each ejector, e.g., prior to each ejection of fluid from a corresponding orifice.

The preferred embodiments enable a chemical array to be prepared or "customized" at least with respect to each feature size of the prepared array. This customization may be accomplished by determining a chemical array layout in which each feature in the chemical array layout has a size that is chosen based on its composition, and fabricating a chemical array according to the biopolymeric array layout. As described in greater detail below, one manner in which this may be accomplished is by providing various activation signals to different ejectors of a fluid drop deposition device employed to fabricate the array according to the array layout. In other words, precisely controlling the particular activation signal provided to each ejector of a deposition head enables customization of the size of each feature of an array. As the activation signal provided to an ejector is directly related to the amount of fluid ejected from an orifice associated with that particular orifice, ejectors capable of being activated using differing signals to eject different amounts of fluids therefrom provides precise control over the feature sizes of an array is provided and thus enable fabrication of an array of features of various sizes. Embodiments include providing signals with various waveforms to different ejectors of a fluid drop deposition device employed to fabricate the array according to the array layout to accomplish the above-described fabrication.

It may be desirable to vary the feature sizes of an array for a number of reasons. For example, it may be advantageous to do so to customize and/or optimize the array to a particular sample with which the array is designed to be used. For example, the abundance level of at least one target in a sample for which the array is designed to be used may be unknown and thus the teachings herein may be employed to design, e.g., optimize, the array features for that particular sample, e.g., in an iterative process. Analogously, an array having various feature sizes may be employed to tailor the array with respect to the at least suspected (i.e., known or anticipated) abundance level of at least one target in a sample for which the array is designed to be used. In this manner, the signal obtained from the binding of the target to the respective features may be customized or tailored to the amount of target present or suspected of being present in the sample. Accordingly, in certain embodiments using these customized arrays, features may be fabricated that provide signal obtained from the resultant binding complexes (feature/target binding complex) that is appropriate or commensurate with limitations of the system, e.g., with respect to noise, detection limit, etc.

As noted above, the ability to control the size of each feature of an array is provided by the preferred methods. That is, the preferred methods provide the ability to customize the chemistry or feature size for each feature (e.g., for each synthesized base) on a per surface bound ligand, e.g., probe, basis (as opposed to a per print swath column or per entire substrate or entire substrate layer basis). As the subject methods provide features of different sizes on a per feature basis, faster array fabrication times for arrays with different features sizes may be obtained because separate printing swath columns are not required to produce different feature sizes, as the feature size of each, individual feature of an array may be controlled within each printing swath. By "swath column" is meant a complete column of features of an array on a substrate surface or a complete pass of the fluid deposition device head across the array substrate upon which fluid (e.g., a phosphoramidite, activator fluid, and the like) is deposited from the deposition head. For example, a swath may encompass a pass from a first side of the substrate to a second side.

Accordingly, a chemical array fabricated according to the preferred methods may have multiple features of different sizes (or all of the features sizes may be the same), but in any event the subject methods enable control over the amount of fluid to be dispensed from each orifice of a deposition head, e.g., prior to each ejector activation event. For example, embodiments may include the fluid drop deposition fabrication of a multi-feature chemical array having a first feature of a first size formed on a region of an array substrate and at least a second feature of a second size formed on a region of the substrate, where the different feature sizes result at least in part from different applied activation signals to ejectors employed in the fabrication of the different sized features. The number of features of a chemical array of different sizes may vary depending on the particular array and may range from about 2 or more, e.g., may be at least about five, at least about ten, at least about one hundred, or at least about one or about two thousand or more. Features of different sizes may be directly adjacent one another in certain embodiments such that a first feature of a first size may be directly next to (without any intervening features) a second feature of a second size.

As noted above, the preferred methods employ a fluid drop deposition device to fabricate one or more arrays on an array substrate surface, where exemplary fluid drop deposition devices include, but are not limited to, pulse jet deposition devices and the like. In general, embodiments of an apparatus employed may include an optional substrate holder on which the substrate can be mounted, and a drop deposition system to deposit drops of the probes or probe precursors. A processor may control the drop deposition system so as to contact fluid from the drop deposition system, e.g., different probes or probe precursors, with different locations on the substrate surface, and repeat this as needed, so as to form the array. The processor may also receive an indication of the location of different regions on a substrate to which fluid, e.g., probes or probe precursors will bind, and controls the drop deposition system to form the array with features of different sizes. The processor may also control the amount of fluid dispensed from each orifice of the deposition head so as to control the size of each feature of the array, e.g., by providing a waveform to each ejector based on the feature size desired to be fabricated.

Computer program products may include a computer readable storage medium having a computer program stored thereon which controls the apparatus to perform a method as described herein. Any computer readable storage medium for any purpose herein may include, for example, an optical or magnetic memory (such as a fixed or portable disk or other device), or a solid state memory.

In further describing the preferred embodiments, an exemplary apparatus that may be employed in the practice of the subject methods is described first to provide a foundation for the preferred methods.

### Fluid Drop Deposition Apparatuses

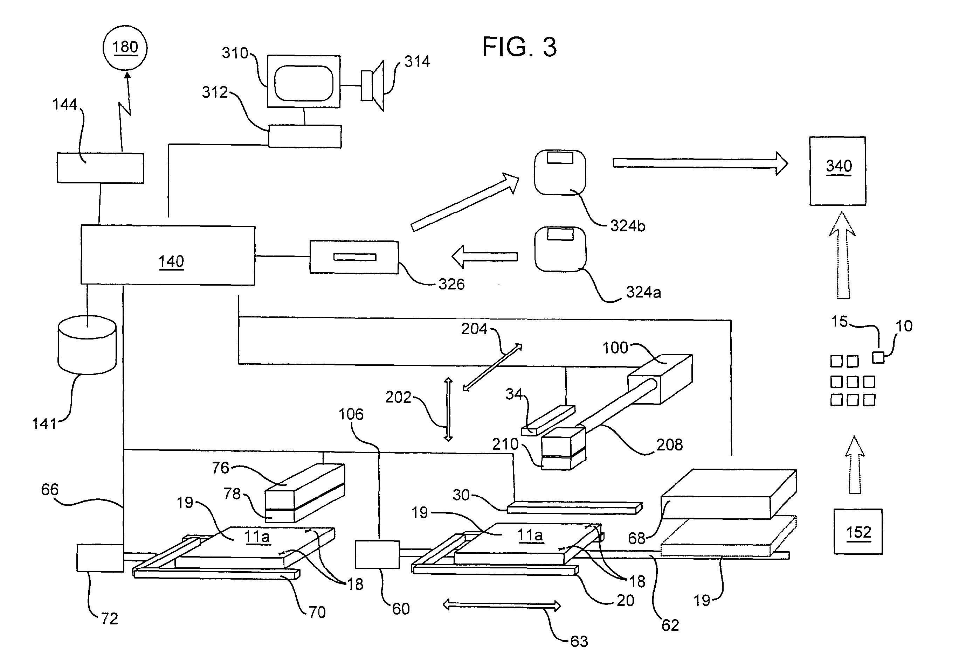

Any suitable fluid drop deposition device may be employed in the practice of the preferred embodiments. In general, such devices include a deposition head system that may contain one or more (for example two) heads mounted on the same head retainer (e.g., see head retainer 208 of Figure 3). Each such head may be of the type commonly used in an ink jet type of printer and may, for example, have about one hundred and fifty drop dispensing orifices in each of two parallel rows, about six chambers for holding a fluid for array fabrication, such as for example polynucleotide solution and the like, communicating with about three hundred ejectors which are positioned in the chambers opposite a corresponding orifice. Each orifice with its associated ejector and portion ofthe chamber, defines a corresponding pulse jet with the orifice acting as a nozzle. Thus, there are about three hundred pulse jets in the exemplary embodiment described above, although it will be appreciated that a given head system may, for example, have more or less pulse jets as desired (for example at least about ten or at least about one hundred pulse jets). In this manner, application of a single electrical pulse to an ejector causes a droplet to be dispensed from a corresponding orifice.

The size of each orifice in the orifice plate may vary, where the orifice may have an exit diameter that ranges from about 1 µm to about 1 mm, e.g., from about 5 µm to about 100 µm, e.g., from about 10 µm to about 60 µm.

Each ejector is in the form of a piezoelectric ejector element (although an electrical resistor operating as a heating element may also be used), which is electrically connected to a source of electrical energy. In accordance with some embodiments, the electrical energy provided to each ejector is controllable, e.g., prior to each ejection of fluid, to deliver a suitable pulse of electricity to activate the ejector on demand and eject a specific volume of fluid.

In certain embodiments of the foregoing exemplary configuration, about twenty orifices in each group of six reservoirs (many of the orifices may be unused, e.g., plugged with a glue or the like), may be dispensing the same fluid. Certain elements of each head may be adapted from parts of a commercially available inkjet print head device.

Exemplary head systems and other suitable dispensing head designs and fluid drop deposition apparatuses that may be employed in the practice of the teachings herein are described, e.g., in United States Patent Nos. 6,323,043 and 6,461,812, the disclosures of which are herein incorporated by reference. However, other head system configurations may be used.

As will be appreciated, the chambers may be filled with fluid using any suitable technique, for example any suitable front- or back-loading technique. For example, in certain embodiments, the chambers may be filled with fluid by contacting the exit ends of the orifices with a quantity of the fluid and then lowering the pressure upstream from the orifices by connecting a source of vacuum, resulting in drawing fluid in an upstream direction through the orifices into the chamber. Selected different fluids (or fluids containing different materials) may be drawn into the different chambers by contacting each orifice group (in fluid communication with a delivery chamber) with a different fluid. Other methods of loading fluid into chambers may be employed as well.

The size of each orifice may vary, where the orifice may have an exit diameter (or exit diagonal depending upon the particular format of the device) that ranges from about 1 µm to about 1 mm, e.g., from about 5 µm to about 100 µm, e.g., from about 10 µm to about 60 µm. The fluid capacity of a given chamber may also vary and may range from about 0.1 pL to about 1 mL or more ,e.g., from about 1.0 pL to about 1 mL or more.

As noted above, some embodiments include controlling the amount of fluid ejected from each orifice by controlling one or more parameters of the electrical energy supplied to an ejector.

It is to be understood that the above-described head configurations are exemplary only and various other dispensing head designs may be used.

### Fabricating a Chemical Array Having Features of Different Sizes

As noted above, embodiments of the preferred methods include controlling the amount of fluid ejected from each orifice of a dispensing head, e.g., for each ejection of fluid (activation event) from each orifice, to control the size of each feature of a chemical array such as a nucleic acid array, polypeptide array, etc. Accordingly, preferred embodiments of include modulating at least one parameter of a fluid drop deposition device to selectively control the amount of fluid ejected from each ejector of a fluid dispensing head, where the parameter may be set before and/or during the fabrication process, i.e., the parameter may be changed during the fabrication process of an array. Any suitable parameter or combination of parameters may be modulated according to the teachings herein. In certain embodiments, at least one of these parameters is the applied activation signal provided to each ejector of each deposition head employed in the fabrication of an array. As such, certain embodiments include selectively adjusting the activation signal used for each ejector of a deposition device to dispense droplets from corresponding orifices of particular sizes. Accordingly, embodiments of the preferred methods include providing a uniquely adjusted ejector activation signal each time the deposition head is activated (fired). As noted above, the waveform of the activation signal for each ejector may be modulated to provide a uniquely adjusted waveform each time the deposition head is activated (fired).

In practicing the preferred methods, a fluid drop deposition device is loaded with a volume of the fluid to be deposited on an array substrate surface. By "loaded" is meant that the fluid is at least introduced into a chamber of the device. In certain embodiments, the preferred devices are employed to deposit fluids that include a biopolymer or a precursor thereof, an activator fluid, etc. In other words, the fluids of interest include ones that are used in the fabrication of an array and include, but are not limited to, a biopolymer or a biomonomer or precursors thereof, activator, linking agent, and the like. Biopolymers are generally biomolecules (e.g., naturally occurring molecules found in living organisms or synthetic mimetics/analogues thereof), where biomolecules of interest include polypeptides, polysaccharides, nucleic acids and the like, as well as derivatives thereof, where of particular interest in many embodiments are nucleic acids, including oligonucleotides and polynucleotides, e.g., cDNA, or polypeptides, e.g., proteins or fragments thereof. Biopolymer precursors include activated monomers, e.g., activated amino acids and nucleotides, employed in step wise fabrication protocols in which biopolymeric ligands are grown on a surface of a substrate, as is known in the art. The fluid may or may not be aqueous, depending on the nature of the molecule to be delivered in the fluid. For example, biopolymeric molecules may be delivered in an aqueous fluid, while activated monomers may require delivery in a non-aqueous fluid.

The fluid may be loaded into a given delivery chamber using any convenient method as noted above. Thus, conventional methods of introducing ink into inkjet heads may be employed. Where such methods are employed, following loading of the fluid sample into the pulse jet dispensing head, it may be desirable to "prime" the device prior to use. One method of priming the device is to apply sufficient pressure to the fluid in the delivery chamber (or conversely negative pressure to the orifice) such that a volume of fluid is forced out of the orifice.

The following "front loading" method of loading fluid into the delivery chamber may be employed in certain embodiments, e.g., where minimal waste of the fluid sample is desired (e.g. where the fluid is an expensive or rare cDNA sample). In this method of fluid sample loading, the orifice is contacted with the fluid under conditions sufficient for fluid to flow through the orifice and into the chamber of the head, where fluid flow may be due, at least in part, to capillary forces in certain embodiments. To assist in the flow of fluid into the orifice, back pressure in the form of suction (i.e. negative pressure) may be applied to the chamber of the head, where the back pressure may be at least about 0.5, e.g., at least about 5, e.g., at least about 10 and even as great as about 100 inches of H₂O or more. In general, each chamber is subjected to the same back pressure. For a further description of this front loading procedure, see e.g., United States Patent Application Serial No. 09/302922; the disclosure of which is herein incorporated by reference. As noted above, back loading methods of loading fluid into a delivery chamber may also be employed.

The amount of fluid required to load the head is typically small, e.g., may not exceed more than about 10 µl in certain embodiments, e.g., may not exceed more than about 5 µl and in certain embodiments may not exceed more than about 2 µl. In certain embodiments, fluid may be loaded rapidly and efficiently into the chambers and reservoirs of the deposition head assemblies from standard multiwell plates, e.g., 96 well microtitre plates, 384 well microtitre plates, and the like.

Following loading of the dispensing head, e.g., by front or back loading as described above or any other suitable method, the head is employed to deposit a quantity of at least one fluid onto the surface of a substrate. In the broadest sense, the preferred methods may be used to deposit a volume of fluid onto any structure, specifically a surface, of any substrate, where the substrate may be a planar structure in certain embodiments.

To deposit fluid onto a substrate surface according to the preferred methods, the loaded pulse jet head is positioned in opposing relationship relative to the surface of the substrate (e.g. with an XYZ translational means), where the orifice(s) is in opposition to the position on the array surface at which deposition of the fluid is desired. The distance between the orifice(s) and the substrate surface will not be so great that the volume of protein fluid cannot reach the substrate surface and produce a spot in a reproducible manner. As such, the distance between the orifice(s) and the substrate surface may range from about 10 µm to about 10 mm, e.g., from about 100 µm to about 2 mm, e.g., from about 200 µm to about 1 mm.

Before, during or after the deposition head is placed into position relative to the substrate surface, a suitable waveform commensurate with the amount of fluid to be dispensed from a corresponding orifice, is applied to each ejector of the pulse jet head to actuate the ejector to dispense a volume of fluid. For example, in many embodiments the ejector is a piezoelectric ejector employing a piezoelectric crystal, e.g., a lead-zirconate-titanate ("PZT") material or the like, that changes shape and/or vibrates when an electric field is applied across it. Accordingly, a voltage applied across a piezoelectric ejector causes it to modulate, e.g., grow in size, causing fluid to be ejected from the orifice. A feature of embodiments of the preferred methods, described in greater detail below, includes selectively modulating the voltage applied across each piezoelectric element of a deposition head, which in turn controls the amount of fluid ejected from a corresponding orifice, to eject a specific volume of fluid from the orifice.

The preferred methods are capable of depositing an extremely small volume of fluid onto a substrate surface, the subject methods may be used to deposit a pico litre quantity of fluid onto a substrate in certain embodiments. By "pico litre quantity" is meant a volume of fluid that is at least about 0.1 pl, e.g., at least about 1 pl, e.g., at least about 10 pl, where the volume may be as high as about 250 pl or higher, where in certain embodiments the amount of fluid may not exceed about 100 nL, e.g., may not exceed about 1 µl. For example in certain embodiments the amount or volume of fluid that is forced out or expelled from the firing chamber may range from about 0.1 to 2000 pl, e.g., from about 0.5 to 500 pl, e.g., from about 1.0 to 250 pl. The speed at which the fluid may be expelled from the firing chamber may be at least about 1 m/s, e.g., at least about 10 m/s and may be as great as about 20 m/s or greater.

Upon actuation of the pulse jet head, as described above, fluid is expelled from the orifice and travels to the substrate surface. Upon contact with the substrate surface, the deposited fluid typically forms a spot (feature) on the substrate surface. As mentioned above, by controlling certain parameters of the dispensing head such as the applied activation signal, e.g., the waveform, applied to each ejector of the pulsejet head, the spot dimensions may be controlled and varied if desired such that spots of various sizes may be produced. For example, the preferred methods may be employed to produce features having a characteristic length scale such as features having widths (that is, diameter, for a round feature) ranging from about 10 µm to about 1.0 cm. In those embodiments where very small features are desired, small features that have a characteristic length scale such as features having widths ranging from about 1.0 µm to 1.0 mm may be produced, e.g., from about 5.0 µm to 500 µm, e.g., from about 10 µm to 200 µm. In certain embodiments, the features may have a characteristic length scale such as features having widths ranging from about from about 30 to 100 µm.

As noted above, application of an electrical pulse to an ejector such as a piezoelectric ejector or the like causes a droplet of fluid to be dispensed from a corresponding orifice, where the size of the droplet is at least dependant in part on the particular electrical pulse applied to the ejector. According to preferred embodiments, the activation signal applied to each ejector (which may be a single ejector or a plurality of ejectors) of a deposition head is modulated to be set to a specific activation signal or adjusted to a particular activation signal setting where the different ejectors of a dispensing head may use different signals, but where each ejector is capable of being selectively set to a respective activation signal, which setting is independent of the signal set for any other ejector. The signals employed may differ in one or more respects such as waveform, and the like. The activation signals, e.g., waveforms, may be set or adjusted for each ejector one time prior to fabricating an array, or may be set or adjusted before each firing of the head, i.e., prior to each activation event of a pulse jet. In other words, embodiments include continually changing one or more activation signals, e.g., with respect to waveforms, provided to one or more ejectors of a deposition head, where such may be performed one or more times during an array fabrication procedure. Accordingly, the amount of fluid expelled from different pulse jets of the same deposition head may be the same or may be different, where such is dependant at least in part on the activation signal, e.g., the unique waveform, provided to the ejectors.

The exact activation signal parameters vary depending on the particular deposition head, ejector, and the like. For piezoelectric ejectors, voltages may range from about 10 volts to about 150 volts, in certain embodiments.

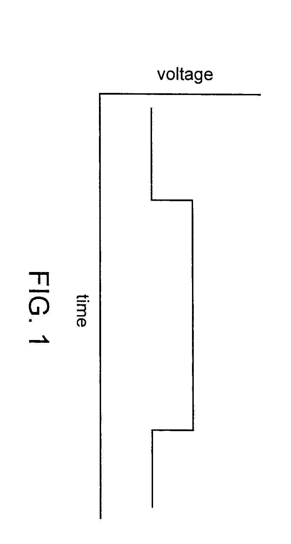

The number of different waveforms per swath that may be utilized may range from about 2 to about several thousands or more, e.g., from about 2 to about hundreds of thousands or more. In many embodiments, the waveform is analogous to a step waveform such as a top-hat profile waveform, as shown in Figure 1.

For example, fluid may be loaded as described above, and before, during or after the fluid is loaded (but in any event prior to an activation event of the pulse jet), the waveforms and/or other signal parameter (but in any event a parameter that affects the volume dispensed from a respective orifice) for each ejector of a deposition head used in the fabrication (certain ejectors may not be used and instead may be masked) may be determined and set, where the waveform and/or other signal parameter provided to any given ejector may stay the same for all activation events or may change for two or more activation events of an array fabrication.

Accordingly, at some time prior to activation of each ejector of a pulse jet, a waveform and/or other signal parameter(s) suitable for the particular droplet size (feature size) desired to be ejected from each pulse jet of the deposition head used is determined. Suitable waveforms and/or one or more other signal parameter may be determined by employing a database of feature size and/or droplet size and corresponding waveforms (and/or one or more other signal parameter). For example, the drop deposition apparatus employed in the fabrication of a biopolymeric array may include (may be operatively coupled to) a waveform generator, such as a waveform circuit, that stores a plurality of waveform signals for a plurality of different, fluid volumes, and outputs the waveform signals to the respective ejectors as needed.

Embodiments include employing an array layout. An "array layout" refers to one or more physical, chemical or biological characteristics of the array, such as feature positioning, one or more feature dimensions such as feature size, density, and the like, some indication of an identity or function (for example, chemical or biological) of a moiety at a given location, how the array should be handled (for example, conditions under which the array is exposed to a sample, or array reading specifications or controls following sample exposure), and the like. Other characteristics may include, but are not limited to, feature positioning on the substrate, one or more other feature dimensions such as probe density, feature density, and the like, trigger tables, orifice masking configuration (if any), ejector gain, indication of a moiety at a given location, etc. In certain embodiments the array layout is provided as a data file, e.g., which may be in the form of text, such as an XML file or the like which may be automatically communicated to a fluid depositions apparatus.

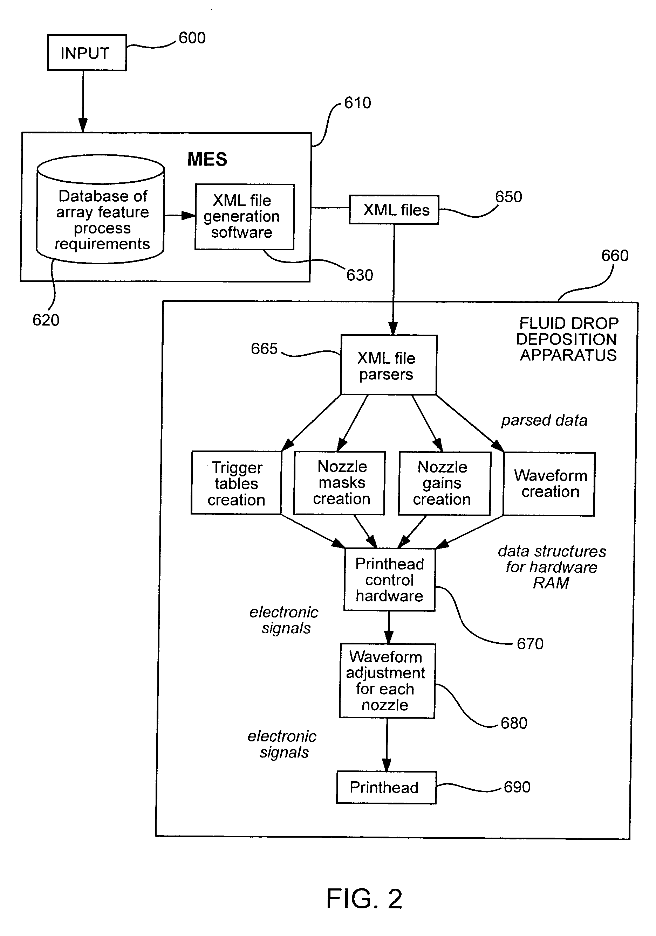

For example, certain embodiments may be illustrated by the block diagram of Figure 2. Embodiments may include inputting 600 or otherwise selecting data that includes parameters used to fabricate an array, and which may at least includes the desired feature sizes of the array to be fabricated. The data may be in any suitable form and may be communicated to a suitable manufacturing execution system ("MES") 610 or the like as is known in the art which is may be generally described as a software/hardware based manufacturing system that collects and organizes data used in manufacturing processes. The MES, if employed, may include a database 620 of array feature process parameters, including a population of various feature sizes, feature composition, etc. Such may also include various patterns of features, where the patterns may include, e.g., organized rows and columns of features, e.g. a grid of features, across the substrate surface, a series of curvilinear rows across the substrate surface, e.g. a series of circles such as a series of concentric circles or semi-circles of features, and the like.

The particular features sizes for the array to be fabricated may be, but are not necessarily, selected from this or other analogous database in certain embodiments. For example, a user may input certain array requirements, general or specific, and the database may be employed to assist in the selection the specific array design parameters that would achieve the inputted requirements, e.g., by employing computing means. XML file generation software 630 or other analogous software (or other suitable method), may provide an output, e.g., in the form of one or more data files such as one or more XML files 650 or the like, of the particular array design parameters, one of which being feature size of the features of the array. The particular activation signal for each ejector may then be determined, and adjusted if needed, to accomplish the particular droplet size desired to be dispensed from a respective orifice (and thus fabricated feature size), e.g., by employing suitable computing means. For example, the determined feature sizes of the array may then be communicated, manually or automatically, to a fluid drop deposition device 660 and particularly to suitable deposition head control hardware 670, manually or automatically, and the activation signal for each ejector may be adjusted 680, manually or automatically, to provide the desired activation signal to each ejector of the deposition head to provide droplet size commensurate with the desired feature size (or not if the waveform that is currently set is the desired waveform). In certain embodiments, the relevant array layout information, e.g., present as one or more data files (e.g., one or more XML files or the like), may first be parsed by a suitable file parser 665 or the like.

In certain embodiments, sizes of the features of an array may be chosen with respect to the at least suspected abundance of a target in a sample for which the array is designed to be used. For example, if a target is at least suspected of being present in such a sample in low or very low abundance amounts, features to which the target sample is to be contacted may be fabricated to be smaller in size with respect to at least one dimension thereof such as width or the like relative to targets having an average, high or very high abundance of targets, and vice versa.

Activation signals may be selectively set for each ejector to provide features having characteristic length scales, e.g., features having widths (that is, diameter, for a round spot) in the range from about 10 µm to about 1.0 cm. In certain embodiments, features may have widths in the range from about 1.0 µm to about 1.0 mm, e.g., from about 5.0 µm to about 500 µm, e.g., from about 10 µm to about 200 µm, e.g., from about 50 µm to about 150 µm. Non-round features may have area ranges equivalent to that of circular features with the foregoing width (diameter) ranges. Accordingly, in certain embodiments, the activation signal provided to each ejector for each activation event may be the same, thus dispensing the same size droplets from the corresponding orifices to provide features of the same sizes. In certain other embodiments, activation signals provided to at least two ejectors may be different, thus dispensing the different sizes droplets from the corresponding orifices to provide features of different sizes. In certain embodiments, methods include determining an at least suspected, including unknown, abundance of target in a sample to which the array is designed to be used and determining feature size (and/or droplet size) therefrom, where such may be accomplished manually or automatically from a suitable database of target abundance amounts and corresponding feature sizes (and/or droplet sizes).

In certain embodiments it may be desirable to fabricate an array of features to low or very low abundance targets in a sample. Accordingly, it may be advantageous to fabricate these features of larger sizes relative to features directed to average, high or very high abundance targets. Accordingly, the waveforms provided to the ejectors of the features to low or very low abundance targets in a sample are suitably set to dispense larger amounts of fluid to provide these relatively larger feature sizes (and vice versa). For example, where the amount of target in or suspected of being in a sample is a low or very low abundant target, the waveforms provided to the appropriate ejectors are selected to provide a fluid droplet commensurate with providing a round feature to such a target that may have dimensions corresponding to this abundance level, e.g., may have a characteristic length scale (e.g., may have a width or the like) that ranges from about 100 µm to about 1 mm. In certain embodiments, features to high or very high abundance targets may have smaller sizes relative to features for average, low or very low abundance targets. For example, where the amount of target in or suspected of being in a high or very high abundant target, the waveforms provided to the appropriate ejectors are selected to provide a fluid droplet commensurate with providing a round feature to such a target that may have dimensions corresponding to this abundance level, e.g., may have a characteristic length scale (e.g., may have a width or the like) that ranges from about 5 µm to about 100 µm.

Arrays fabricated in accordance with the teachings herein typically include at least two distinct polymers (i.e., two distinct probes), e.g., that differ by monomeric sequence, attached to different and known locations on the array substrate surface. As noted above, each distinct polymeric sequence of the array is typically present as a composition of multiple copies of the polymer on a substrate surface, e.g., as a spot or feature on the surface of the substrate. In accordance with the preferred embodiments, the size of each feature may be precisely and independently controlled such that features need not all be of the same size and some or all of the features may be of different sizes. For example, in certain embodiments, features of an array that differ in monomeric sequences (i.e., differ in composition) may be of different sizes. Embodiments may also include features of an array that include the same monomeric sequences or are of the same composition (i.e., replicate features) may be of different sizes.

Any given substrate may carry one, two, four or more arrays disposed on a surface of the substrate. Depending upon the use, any or all of the arrays may be the same or different from one another and each may contain multiple spots or features as noted above. For example, a plurality of arrays may be stably associated with one substrate, where the arrays are spatially separated from some or all of the other arrays associated with the substrate. In certain embodiments, a substrate may carry at least two arrays. The at least two arrays may include some or all of the features of the same composition, but some or all of which differ in feature size.

The probes may be immobilized on surfaces of any of a variety of different substrates, including both flexible and rigid substrates. Typically, the materials provide physical support for the deposited material and endure the conditions of the deposition process and of any subsequent treatment or handling or processing that may be encountered in the use of the particular array. The array substrate may take any of a variety of configurations ranging from simple to complex. Thus, the substrate could have generally planar form, as for example, a slide or plate configuration, such as a rectangular or square disc. In many embodiments, the substrate will be shaped generally as a rectangular solid, having a length in the range of about 4 mm to 200 mm, usually about 4 mm to 150 mm, more usually about 4 mm to 125 mm; a width in the range of about 4 mm to 200 mm, usually about 4 mm to 120 mm, and more usually about 4 mm to about 80 mm; and a thickness in the range of about 0.01 mm to about 5 mm, usually from about 0.1 mm to about 2 mm and more usually from about 0.2 mm to about 1 mm. However, larger or smaller substrates may be and can be used. Substrates of other configurations and equivalent areas may be employed. The configuration of the array may be selected according to manufacturing, handling, and use considerations.

The substrates may be fabricated from any of a variety of materials. In certain embodiments, such as for example where production of binding pair arrays for use in research and related applications is desired, the materials from which the substrate may be fabricated should ideally exhibit a low level of non-specific binding during hybridization events. In many situations, it will also be preferable to employ a material that is transparent to visible and/or UV light. For flexible substrates, materials of interest include: nylon, both modified and unmodified, nitrocellulose, polypropylene, and the like, where a nylon membrane, as well as derivatives thereof, may be particularly useful in this embodiment. For rigid substrates, specific materials of interest include: glass; fuse silica; silicon, plastics (for example polytetraflouroethylene, polypropylene, polystyrene, polycarbonate, and blends thereof, and the like); metals (for example, gold, platinum, and the like).

The substrate surface onto which the probes are immobilized may be smooth or substantially planar, or have irregularities, such as depressions or elevations. The substrate surface may be modified with one or more different layers of compounds that serve to modify the properties of the surface in a desirable manner. Such modification layers of interest include: inorganic and organic layers such as metals, metal oxides, polymers, small organic molecules and the like. Polymeric layers of interest include layers of: peptides, proteins, polynucleic acids or mimetics thereof (for example, peptide nucleic acids and the like); polysaccharides, phospholipids, polyurethanes, polyesters, polycarbonates, polyureas, polyamides, polyetheyleneamines, polyarylene sulfides, polysiloxanes, polyimides, polyacetates, and the like, where the polymers may be hetero- or homopolymeric, and may or may not have separate functional moieties attached thereto (for example, conjugated).

The fabrication of the arrays may be partially or completely automated. For example, an automated system as illustrated in Figure 3 may be employed. At some point prior to fabrication, an activation signal for each ejector employed in the fabrication procedure is determined and communicated to suitable activation generating hardware/software so that a unique activation signal is applied to each ejector and a suitable volume of fluid, commensurate with a desired features size, is dispensed from each pulse jet used. For example, as noted above, such automated apparatuses may include a waveform generator such as a waveform circuit or the like, that stores a plurality of waveform signals, each stored waveform signal corresponding to a different amount of fluid volume ejected from an orifice. The waveform circuit may output waveform signals to appropriate fluid drop deposition apparatus hardware so that a particular waveform signal may be applied to a particular ejector of a deposition head, commensurate with the amount of fluid desired to be dispensed from a respective orifice for a given activation event. To accomplish this, the same or different circuit may be provided for generating signals based on the output waveform signals from the waveform circuit and for outputting the signals to an ejector.

The above methods may be substantially, if not completely automated, so that fluid may be loaded and deposited onto a surface automatically. As such, the subject methods are amenable to high throughput applications, e.g., high throughput manufacturing applications. In automated versions of the subject methods, automated apparatuses are employed and typically include at least a manner for precisely controlling the position of one or more dispensing heads with respect to a substrate surface (an XYZ translational mechanism) and for firing the head. Such automated devices are well known to those of skill in the art and are disclosed in United States Patent Nos. 6,242,266; 6,232,072; and 6,180,351; as well as in copending, commonly assigned United States Patent Serial No. Application Serial No. 10/281,408, the disclosures ofwhich are herein incorporated by reference.

One such automated system that may be employed in the practice of the preferred methods is described with reference Figure 3, which shows an apparatus capable of executing a method as taught herein. While the apparatus is described as configured for use with a large substrate 19 which will later be cut into individual substrates 10 to provide array assemblies 15 that include a substrate 10 and at least one array thereon it will be apparent that the apparatus may also be employed to fabricate one or more arrays on a substrate that is not later cut, but is used as fabricated. The apparatus shown basically has two sections, a first, optional section on which a surface 11a of the substrate 19 may be functionalized if desired, and a second section in which the array is fabricated on a surface of the substrate 19 such as a functionalized surface (if performed). While these two sections are shown as part of one apparatus in Figure 3, it will be appreciated that they may be entirely separate with the first section preparing many functionalized substrates 19 which are forwarded to the fabrication section for array fabrication, with their possibly being one or more first sections and one or more second sections remote from each other.

The first, optional section of the apparatus of Figure 3 includes a first substrate station 70 which can retain a mounted substrate 19, a third transporter 70, a deposition head retainer 76, and a first drop deposition system in the form of a pulse jet head 78 system. Pulse jet head system 78 may be analogous to that described above and include about one, about two, about three or more (e.g., about ten or more) pulse jet heads which deliver drops of fluid onto surface 11a of substrate 19 all so as to functionalize that surface. Drops may be delivered from head 78 while substrate 19 is advanced beneath it by transporter 70, all under control of a processor 140.

The second section of the apparatus of Figure 3 includes substrate station 20 (sometimes referenced as a "substrate holder") on which a substrate 19 may be mounted and retained. Pins or similar means (not shown) may be provided on substrate station 20 by which to approximately align substrate 19 to a nominal position thereon (with optional alignment marks 18 on substrate 19 being used for more refined alignment). Substrate station 20 may include a vacuum chuck connected to a suitable vacuum source (not shown) to retain a substrate 19 without exerting too much pressure thereon, since substrate 19 may be made of glass. An optional flood station 68 may be provided which can expose the entire surface of substrate 19, when positioned at station 68 as illustrated in broken lines in Figure 3, to a fluid typically used in the *in situ* process, and to which all features must be exposed during each cycle (for example, oxidizer, deprotection agent, and wash buffer). In the case of deposition of a previously obtained polynucleotide, flood station 68 need not be present.

A second drop deposition system is present in the form of a dispensing head 210 which is retained by a head retainer 208. As mentioned above though, the head system may include more than one head 210 retained by the same head retainer 208 so that such retained heads move in unison together. The transporter system may include a carriage 62 connected to a first transporter 60 controlled by processor 140 through line 66, and a second transporter 100 controlled by processor 140 through line 106. Transporter 60 and carriage 62 are used to execute one axis positioning of station 20 (and hence mounted substrate 19) facing the dispensing head 210, by moving it in the direction of axis 63, while transporter 100 is used to provide adjustment of the position of head retainer 208 (and hence head 210) in a direction of axis 204 (and therefore move head 210 in the direction of travel 204a which is one direction on axis 204). In this manner, head 210 can be scanned line by line along parallel lines in a raster fashion, by scanning along a line over substrate 19 in the direction of axis 204 using transporter 100, while line to line transitioning movement of substrate 19 in a direction of axis 63 is provided by transporter 60. Transporter 60 may also move substrate holder 20 to position substrate 19 in flood station 68 (as illustrated by the substrate 19 shown in broken lines in Figure 3). Head 210 may also optionally be moved in a vertical direction 202, by another suitable transporter (not shown) and its angle of rotation with respect to head 210 also adjusted. It will be appreciated that other scanning configurations could be used during array fabrication. It will also be appreciated that both transporters 60 and 100, or either one of them, with suitable construction, could be used to perform the foregoing scanning of head 210 with respect to substrate 19. Thus, when the present application recites "positioning", "moving", or similar, one element (such as head 210) in relation to another element (such as one of the stations 20 or substrate 19) it will be understood that any required moving can be accomplished by moving either element or a combination of both of them. The head 210, the transporter system, and processor 140 together act as the deposition system of the apparatus. An encoder 30 communicates with processor 140 to provide data on the exact location of substrate station 20 (and hence substrate 19 if positioned correctly on substrate station 20), while encoder 34 provides data on the exact location ofholder 208 (and hence head 210 if positioned correctly on holder 208). Any suitable encoder, such as an optical encoder, may be used which provides data on linear position.

Processor 140 may also have access through a communication module 144 to a communication channel 180 to communicate with a remote station. Communication channel 180 may, for example, be a Wide Area Network ("WAN"), telephone network, satellite network, or any other suitable communication channel. Array parameters such as certain waveforms may be communicated to the processor via such a remote station.

Each of one or more heads 210 may be of a type described above, and may, for example, include five or more dispensing chambers (e.g., at least one for each of four nucleoside phosphoramidite monomers plus at least one for an activator solution) each communicating with a corresponding set of multiple drop dispensing orifices and multiple ejectors which are positioned in the chambers opposite respective orifices. As described above, application of an electric pulse to an ejector will cause a droplet to be dispensed from a corresponding orifice, its size determined at least in part by the magnitude of the applied electric pulse. Each ejector, e.g., piezoelectric ejector, is under the control of processor 140, which processor, under the control of a suitable software program, adjusts the activation signal provided to each ejector, commensurate with a particular desired droplet size to be ejected. Processor 140 may communicate with memory 141 which may include a database of various droplet sizes and/or feature sizes, each corresponding to a particular waveform. Accordingly a suitable waveform for each ejector may be selected and the processor may perform all of the steps necessary to provide the suitable waveform to each ejector. Multiple heads could be used instead of a single head 210, each being similar in construction to head 210 and being movable in unison by the same transporter or being provided with respective transporters under control of processor 140 for independent movement. In this alternate configuration, each head may dispense a corresponding biomonomer (for example, one of four nucleoside phosphoramidites) or an activator solution.

The apparatus preferably also includes a display 310, speaker 314, and operator input device 312. Operator input device 312 may, for example, be a keyboard, mouse, or the like. Input system may be, or may be operatively coupled to, an MES system or the like as described above, and/or a data file (e.g., which may be in the form of text, such as an XML file or the like), or any analogous component that includes and is capable of communicating array parameters such as desired feature sizes to the processor. Processor may be capable of receiving array layout information, e.g., in the form of one or more data files (e.g., which may be in the form of text such as such as one or more XML files or the like), from input device 312, and parsing the parameters (see for example Figure 2), to at least provide desired feature sizes, which data may then be used to execute the step necessary to determine and provide suitable waveforms to each ejector.

Processor 140 has access to a memory 141, and controls print head system 78 and print head 210 (specifically, the activation of the ejectors therein), operation of the transporter system and the third transporter 72, and operation of display 310 and speaker 314. Memory 141 may be any suitable device in which processor 140 can store and retrieve data, such as magnetic, optical, or solid state storage devices (including magnetic or optical disks or tape or RAM, or any other suitable device, either fixed or portable). Processor 140 may include a general purpose digital microprocessor suitably programmed from a computer readable medium carrying necessary program code, to execute all of the steps required by the preferred embodiments, or any hardware or software combination which will perform those or equivalent steps. The programming may be provided remotely to processor 141 through communication channel 180, or previously saved in a computer program product such as memory 141 or some other portable or fixed computer readable storage medium using any of those devices mentioned below in connection with memory 141. For example, a magnetic or optical disk 324a may carry the programming, and can be read by disk writer/reader 326. A cutter 152 may be provided to cut substrate 19 into individual array assemblies 15.

As shown in Figure 3, substrate 19 is already mounted on substrate station 70. If it is desired to surface modify or functionalize substrate 19, such may be accomplished at an optional fuctionalization station or optional first fabrication station 70. Station 70 may be used to provide a linking layer on the substrate surface (see for example United States Application Serial No. 10/281,408, the disclosure of which is herein incorporated by reference). Station 70, may employ transporter system 72 to advance the mounted substrate 19 beneath head system 78 while drops of fluid, e.g., for a linking layer, are deposited on the substrate. For example, in fabricating arrays by depositing previously obtained biopolymers or by the *in situ* method, the entire region on the substrate surface on which an array will be formed (an "array region") may be exposed to one or more reagents. For example, in either method, array regions may be exposed to one or more linker compositions to form a suitable linker layer on the surface which binds to both the substrate and biopolymer or biomonomer. Particularly useful linker compositions and methods are disclosed in United States Patents 6,319,674 and 6,444,268 which may use various silane based compounds as linkers or other surface modifying agents (for example, to modify the surface energy to control deposited drop spread).

The substrate 19 with the modified surface such as a linking layer surface (if performed) may then be transferred to the substrate station 20 either manually or by the robot arm, as which station one or more arrays will be fabricated on the substrate surface 11a. In this sequence it will be assumed that processor 140 is already programmed with the necessary layout information, which at least includes the desired feature sizes, to fabricate at least one array on the substrate surface (Alternatively, characteristics of a particular sample to be used with the fabricated array(s) may be provided to the processor, which may then perform the steps necessary to use this information to determine suitable feature sizes (e.g., by accessing a database of memory 141), e.g., based on target abundance, and thus suitable waveforms to accomplish the appropriate feature sizes).

Using information such as the foregoing array layout and the number and location of pulse jets in head 210, processor 140 may then determine a reagent drop deposition pattern and adjust the activation signal for each ejector of head 210 accordingly to provide features of sizes commensurate with that of the pattern. Alternatively, such a pattern may be determined by another processor (such as a remote processor) and communicated to memory 141 through communication channel 180 or by forwarding a portable storage medium carrying such pattern data for reading by reader/writer 326. Processor 140 controls fabrication, in accordance with the deposition pattern, to generate the one or more arrays on sections of substrate 19 which may later be cut into individual substrates 10 to provide a plurality of array assemblies 15.

Depending on the particular activation signal provided to an ejector, drops of fluid of particular sizes used in the fabrication of the one or more arrays are deposited from the head while moving along each line of the raster during scanning. For example, different waveforms provided to different ejectors will result in different droplet sizes being dispensed from the orifices of ejectors with different waveforms applied. No drops are dispensed for features or otherwise during line transitioning. Processor 140 also sends substrate 19 to optional flood station 68 for cycle intervening or final steps as required, all in accordance with the conventional in situ array, e.g., polynucleotide array fabrication process, described above. As a result of the above, at least one array is fabricated on substrate 19, where an array may have features of different sizes.

The substrate 19 may then be sent to a cutter 152 wherein sections of substrate 19 are separated into multiple substrates 10 carrying one or more arrays, to provide multiple array assemblies 15. One or more array assemblies 15 may then be placed in a package 340 and forwarded to one or more remote users to be used in an array assay.

During array fabrication errors may be monitored and used in any of the manners described in United States Patent Application "Polynucleotide Array Fabrication" by Caren et al., Serial No. 09/302898 filed April 30, 1999, and US-A-6,232,072, the disclosures of which are herein incorporated by reference. Also, one or more identifiers in the form of bar codes may be attached or printed onto sections of substrate 19, e.g., defining particular parameters of the arrays such as the feature sizes and addresses of such. Such may be attached to the substrate, e.g., before entering, or after leaving, optional station 70, or before entering or after leaving the fabrication station 20. If bar codes are present before entering one of the fabrication stations, they may include an indication of the location of different regions on a substrate to which probes or probe precursors are to be fabricated at different feature sizes. They can then be read by a bar code reader (not shown) at a fabrication station, and received by processor 140 to then control the drop deposition system to form the one or more arrays with features of different sizes either within the same or different arrays, e.g., features of the same or different probe composition in one of the regions which are repeated in another of the regions at different feature sizes. Any of the foregoing types of information on the different regions can be contained within the bar codes 356 (or other identifiers) or in a file previously linked to them. Regardless of the foregoing, at any point in the operation of the apparatus of Figure 3, processor 140 may associate each array with an identifier such as a bar code, which identifier may carry an indication of the different feature sizes of the same or different probe composition or may be linked to a file carrying such information. The file and linkage may be stored by processor 140 and saved into memory 141 or may be written onto a portable storage medium 324b which is then placed in the same package 340 as the corresponding array assembly 15 for shipping to a remote customer. The actual indication may take many forms. For example, one or more of the bar codes associated with the arrays on the same substrate 10 may specify that one array is the same as another array such as array, but that the region carrying one has a feature size which is a proportion of the region at the other. Alternatively, absolute feature sizes may be provided for each array in its associated bar code.

Optionally, other characteristics of the fabricated arrays may be included in the code applied to the array substrate or a housing, or a file linkable to such code, in a manner as described in US-A-6,180,351, incorporated herein by reference.

It will be understood that there may be multiple user stations, each remote from the fabrication station and each other, in which case the fabrication station acts as a central fabrication station (that is, a fabrication station which services more than one remote user station at the same or different times). One or more such user stations may be in communication with the fabrication station at any given time. It will also be appreciated that processors 140 and 162 may be programmed from any computer readable medium carrying a suitable computer program. For example, such a medium can be any memory device such as those described in connection with memory 141, and may be read locally (such as by reader/writer 326 in the case of processor 140 or writer/reader 186 in the case of processor 162) or from a remote location through communication channel 180. A variety of different chemical arrays may be produced according to the preferred methods including biopolymeric arrays such as nucleic acid arrays, peptide arrays, and the like.

### Chemical Arrays Having Features of Different Sizes

Also provided for in the teachings herein are chemical arrays of nucleic acids (e.g., oligonucleotides, polynucleotides), peptides (e.g., polypeptides, proteins, antibodies) or other molecules capable of binding with target biomolecules in a solution (e.g., nucleic acids, proteins, etc.), which arrays may have features of different sizes, e.g., customized or tailored such as for example with respect to the at least anticipated abundance of a target in a sample for which the array is designed to assay. That is, an array of probes (i.e., binding agents or members of a binding pair in this context) covalently bonded to a substrate surface in the form of an "array" or pattern is provided where certain parameters of the array have been tailored to the amount of a particular target present or suspected of being present in a sample for which the array is designed to assay. Such arrays find use in a variety of different fields, e.g., genomics (in sequencing by hybridization, SNP detection, differential gene expression analysis, identification of novel genes, gene mapping, finger printing, mutations analysis, etc.), proteomics, and the like.

The preferred arrays typically include at least two distinct polymers that differ by monomeric sequence attached to different and known locations on the substrate surface. Each distinct polymeric sequence of the array may be present as a composition of multiple copies of the polymer on a substrate surface, e.g., as a spot or feature on the surface of the substrate, where the size of the features of an array may be the same or may be different. The number of distinct polymeric sequences, and hence spots or similar structures, present on the array may vary, where a typical array may contain more than about ten, more than about one hundred, more than about one thousand, more than about ten thousand or even more than about one hundred thousand features in an area of less than about 20 cm² or even less than about 10 cm². For example, features may have characteristic length scales, e.g., features may have widths (that is, diameter, for a round spot), in the range from about 10 µm to about 1.0 cm. In other embodiments, each feature may have a characteristic length scale such as a width in the range from about 1.0 µm to about 1.0 mm, e.g., from about 5.0 µm to about 500 µm, e.g., from about 10 µm to about 200 µm, e.g., from about 50 µm to about 150 µm. Non-round features may have area ranges equivalent to that of circular features with the foregoing width (diameter) ranges. At least some, or all, of the features are of different compositions (for example, when any repeats of each feature composition are excluded, the remaining features may account for at least about 5%, 10% or 20% of the total number of features). Interfeature areas will typically (but not essentially) be present which do not carry any polynucleotide (or other biopolymer or chemical moiety of a type of which the features are composed). The spots or features of distinct polymers present on the array surface are generally present as a pattern, where the pattern may be in the form of organized rows and columns of spots, e.g. a grid of spots, across the substrate surface, a series of curvilinear rows across the substrate surface, e.g. a series of concentric circles or semi-circles of spots, and the like.

In certain embodiments the chemical arrays are arrays of polymeric or biopolymeric ligands or molecules, i.e., binding agents. In many embodiments of interest, the arrays are arrays of nucleic acids, including oligonucleotides, polynucleotides, cDNAs, mRNAs, synthetic mimetics thereof, and the like.

Each array may cover an area of less than about 100 cm², or even less than about 50 cm², 10 cm² or 1 cm². In many embodiments, the substrate carrying the one or more arrays will be shaped generally as a rectangular solid (although other shapes are possible), having a length of more than about 4 mm and less than about 1 m, usually more than about 4 mm and less than about 600 mm, more usually less than about 400 mm; a width of more than about 4 mm and less than about 1 m, usually less than about 500 mm and more usually less than about 400 mm; and a thickness of more than about 0.01 mm and less than about 5.0 mm, usually more than about 0.1 mm and less than about 2 mm and more usually more than about 0.2 and less than about 1 mm. With arrays that are read by detecting fluorescence, the substrate may be of a material that emits low fluorescence upon illumination with the excitation light. Additionally in this situation, the substrate may be relatively transparent to reduce the absorption of the incident illuminating laser light and subsequent heating if the focused laser beam travels too slowly over a region. For example, the substrate may transmit at least about 20%, or about 50% (or even at least about 70%, 90%, or 95%), of the illuminating light incident on the substrate as may be measured across the entire integrated spectrum of such illuminating light or alternatively at 532 nm or 633 nm.

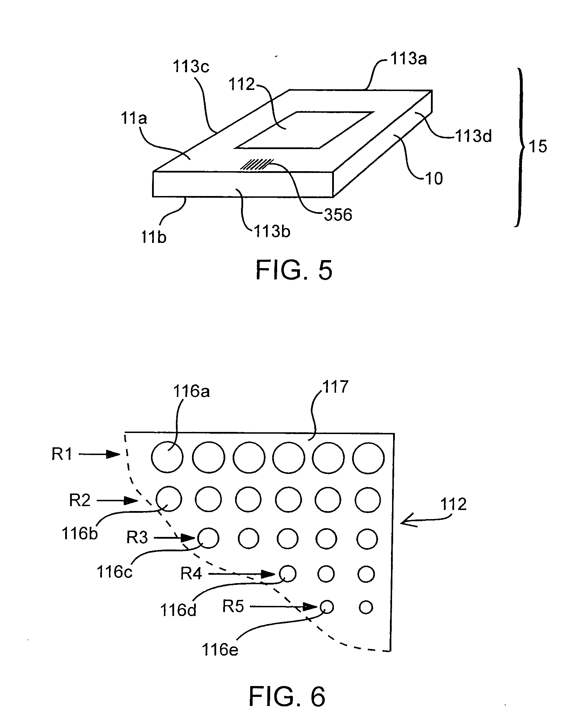

Figures 6, 7 and 8, show preferred chemical arrays. Figure 5 shows array assembly 15 that includes a contiguous planar substrate 10 carrying an array 112 disposed on a surface 11a of substrate 10. It will be appreciated though, that more than one array (any of which are the same or different) may be present on surface 11a, with or without spacing between such arrays. That is, any given substrate may carry one, two, four or more arrays disposed on a front surface of the substrate and depending on the use of the array, any or all of the arrays may be the same or different from one another and each may contain multiple spots or features where some or all of the features may be of different sizes. The one or more arrays 112 usually cover only a portion of the surface 11a, with regions of the surface 11a adjacent the opposed sides 113c, 113d and leading end 113a and trailing end 113b of substrate 10, not being covered by any array 112. A second surface 11b of the substrate 10 does not carry any arrays 112. Each array 112 may be designed for testing against any type of sample, whether a trial sample, reference sample, a combination of them, or a known mixture of biopolymers such as polynucleotides. Substrate 10 may be of any shape, as mentioned above.

Chemical array 112 may contain multiple spots or features 116 of biopolymers, e.g., in the form of polynucleotides. All of the features 116 may be different, or some or all could be the same, but in any event the feature size of each feature has been precisely controlled as described above, e.g., prior to each activation event. The interfeature areas 117 could be of various sizes and configurations. Each feature carries a predetermined biopolymer such as a predetermined polynucleotide (which includes the possibility of mixtures of polynucleotides).

Substrate 10 may carry on surface 11a (and/or surface 11b), an identification code analogous to that describe above, e.g., in the form of bar code 356 or the like printed on the substrate in the form of a paper or plastic or electric label attached by adhesive or any convenient means. Identifiers such as other optical or magnetic identifiers could be used instead of bar codes which will carry the information discussed above. The identification code may contain information relating to array 112, where such information may include, but is not limited to, an identification of array 112, i.e., layout information relating to the array(s), including the feature sizes and addresses thereof, etc. Each identifier may be associated with its corresponding array by being positioned adjacent that array. However, this need not be the case and identifiers such as bar codes may be positioned elsewhere on an array substrate, e.g., if some other means of associating each bar code with its corresponding array is provided (for example, by relative physical locations). Further, a single identifier might be provided which is associated with more than one array on a same substrate and such one or more identifiers may be positioned on a leading or trailing end of substrate. The substrate may further have one or more fiducial marks for alignment purposes during array fabrication.

Figure 6 shows an enlarged view of a portion of array 112 of Figure 5 showing features of differing sizes. As shown, array 112 includes a first row R1 of features 116a of a first size, a second row R2 of features 116b of a second size, a third row R3 of features 116c of a third size, a fourth row R4 of features 116d of a fourth size and a fifth row R5 of features 116e of a fifth size. The compositions of the features may all be the same or some or all of the features may be of different compositions (i.e., be different probes). For example, a given row may include features of different compositions, and other rows of the array may be replicates of those different composition features, but which differ in size. For example, first row R1 may include features of different compositions, which features are repeated in at least one other row in a size that differs from the size of the features in first row R1, e.g., repeated in row R2 (or R2...). While the features of array 112 are shown arranged in rows/columns, it is to be understood that is configuration is for exemplary purposes only and is in no way intended to limit the scope of the claims as the features of an array may be arranged in any suitable configuration.

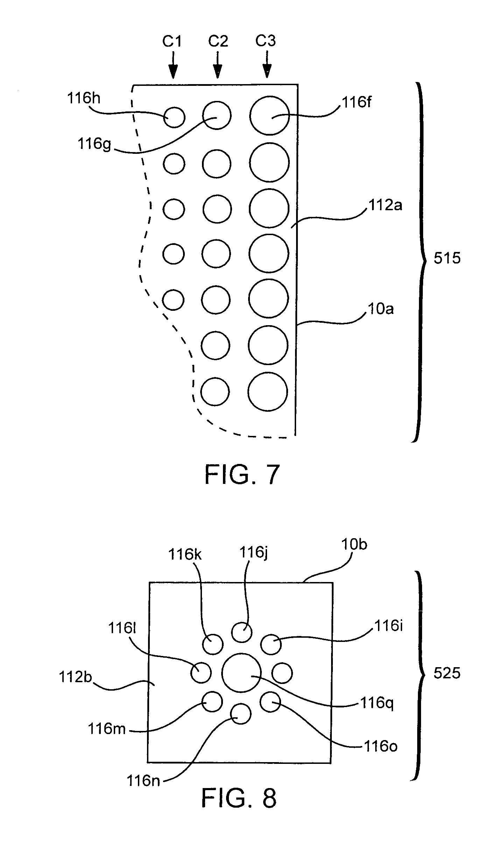

Figures 7 and 8 show various exemplary arrays 112a and 112b, respectively, that may incorporate the teachings herein. While arrays 112a and 112b are shown on different substrates, however they may be on the same substrate which may or may not be later cut to individual array assemblies.

Figure 7 shows a portion of an array assembly 515 having array 112a of features 116 on substrate 10a wherein the portion of array 112a shown is configured generally as three columns C1, C2 and C3 of features, each column having features 116h, 116g and 116f, respectively, that differ in size from those of any other column. The probe composition in the features may be the same or some may vary. For example, features across the same row may have the same feature composition, but may differ in feature size and the compositions may differ amongst features of the same column.

Figure 8 shows array assembly 525 having array 112b of features 116i-116q on substrate 10b configured generally as a circular array wherein some or all of the features 116 may differ in size and/or composition.

A feature of the preferred arrays, which feature results from the protocol employed to manufacture the arrays, is that some or all of the features may differ in size.

### Utility

The preferred arrays find use in a variety of different applications, where such applications are generally analyte detection applications in which the presence of a particular analyte (i.e., target) in a given sample is detected at least qualitatively, if not quantitatively. Protocols for carrying out such assays are well known to those of skill in the art and need not be described in great detail here. Generally, the sample suspected of containing the analyte of interest is contacted with an array produced according to the preferred methods under conditions sufficient for the analyte to bind to its respective binding pair member (i.e., probe) that is present on the array. Thus, if the analyte of interest is present in the sample, it binds to the array at the site of its complementary binding member and a complex is formed on the array surface. The presence of this binding complex on the array surface is then detected, e.g. through use of a signal production system, e.g. an isotopic or fluorescent label present on the analyte, etc. The presence of the analyte in the sample is then deduced from the detection of binding complexes on the substrate surface. Specific analyte detection applications of interest include, but are not limited to, hybridization assays in which nucleic acid arrays are employed.

In these assays, a sample to be contacted with an array may first be prepared, where preparation may include labelling of the targets with a detectable label, e.g. a member of signal producing system. Generally, such detectable labels include, but are not limited to, radioactive isotopes, fluorescers, chemiluminescers, enzymes, enzyme substrates, enzyme cofactors, enzyme inhibitors, dyes, metal ions, metal sols, ligands (e.g., biotin or haptens) and the like. Thus, at some time prior to the detection step, described below, any target analyte present in the initial sample contacted with the array may be labelled with a detectable label. Labelling can occur either prior to or following contact with the array. In other words, the analyte, e.g., nucleic acids, present in the fluid sample contacted with the array may be labelled prior to or after contact, e.g., hybridization, with the array. In some embodiments of the preferred methods, the sample analytes e.g., nucleic acids, are directly labelled with a detectable label, wherein the label may be covalently or non-covalently attached to the nucleic acids of the sample. For example, in the case of nucleic acids, the nucleic acids, including the target nucleotide sequence, may be labelled with biotin, exposed to hybridization conditions, wherein the labelled target nucleotide sequence binds to an avidin-label or an avidin-generating species. In an another embodiment, the target analyte such as the target nucleotide sequence is indirectly labelled with a detectable label, wherein the label may be covalently or non-covalently attached to the target nucleotide sequence. For example, the label may be non-covalently attached to a linker group, which in turn is (i) covalently attached to the target nucleotide sequence, or (ii) comprises a sequence which is complementary to the target nucleotide sequence. In another example, the probes may be extended, after hybridization, using chain-extension technology or sandwich-assay technology to generate a detectable signal (see, e.g., U.S. Patent No. 5,200,314).

In certain embodiments, the label is a fluorescent compound, i.e., capable of emitting radiation (visible or invisible) upon stimulation by radiation of wavelength different from that of the emitted radiation, or through other manners of excitation, e.g. chemical or non-radiative energy transfer. The label may be a fluorescent dye. Usually, a target with a fluorescent label includes a fluorescent group covalently attached to a nucleic acid molecule capable of binding specifically to the complementary probe nucleotide sequence.

Following sample preparation (labelling, pre-amplification, etc.), the sample may be introduced to the array using any convenient protocol, e.g., sample may be introduced using a pipette, syringe or any other suitable introduction protocol. The sample is contacted with the array under appropriate conditions to form binding complexes on the surface of the substrate by the interaction of the surface-bound probe molecule and the complementary target molecule in the sample. The presence of target/probe complexes, e.g., hybridized complexes, may then be detected. In the case of hybridization assays, the sample is typically contacted with an array under stringent hybridization conditions, whereby complexes are formed between target nucleic acids that agent are complementary to probe sequences attached to the array surface, i.e., duplex nucleic acids are formed on the surface of the substrate by the interaction of the probe nucleic acid and its complement target nucleic acid present in the sample. A "stringent hybridization" and "stringent hybridization wash conditions" in the context of nucleic acid hybridization (e.g., as in array, Southern or Northern hybridizations) are sequence dependent, and are different under different experimental parameters. Stringent hybridization conditions that can be used to identify nucleic acids within the scope of the teachings herein can include, e.g., hybridization in a buffer comprising 50% formamide, 5×SSC, and 1% SDS at 42°C, or hybridization in a buffer comprising 5×SSC and 1% SDS at 65°C, both with a wash of 0.2×SSC and 0.1% SDS at 65°C. Exemplary stringent hybridization conditions can also include a hybridization in a buffer of 40% formamide, 1 M NaCl, and 1% SDS at 37°C, and a wash in 1×SSC at 45°C. Alternatively, hybridization to filter-bound DNA in 0.5 M NaHPO4, 7% sodium dodecyl sulfate (SDS), 1 mM EDTA at 65°C, and washing in 0.1×SSC/0.1% SDS at 68°C can be employed. Yet additional stringent hybridization conditions include hybridization at 60°C or higher and 3 × SSC (450 mM sodium chloride/45 mM sodium citrate) or incubation at 42°C in a solution containing 30% formamide, 1M NaCl, 0.5% sodium sarcosine, 50 mM MES, pH 6.5. Those of ordinary skill will readily recognize that alternative but comparable hybridization and wash conditions can be utilized to provide conditions of similar stringency.

In certain embodiments, the stringency of the wash conditions that set forth the conditions which determine whether a nucleic acid is specifically hybridized to a surface bound nucleic acid. Wash conditions used to identify nucleic acids may include, e.g.: a salt concentration of about 0.02 molar at pH 7 and a temperature of at least about 50°C or about 55°C to about 60°C; or, a salt concentration of about 0.15 M NaCl at 72°C for about 15 minutes; or, a salt concentration of about 0.2×SSC at a temperature of at least about 50°C or about 55°C to about 60°C for about 15 to about 20 minutes; or, the hybridization complex is washed twice with a solution with a salt concentration of about 2xSSC containing 0.1% SDS at room temperature for 15 minutes and then washed twice by 0.1×SSC containing 0.1% SDS at 68°C for 15 minutes; or, equivalent conditions. Stringent conditions for washing can also be, e.g., 0.2×SSC/0. % SDS at 42°C.

A specific example of stringent assay conditions is rotating hybridization at 65°C in a salt based hybridization buffer with a total monovalent cation concentration of 1.5 M (e.g., as described in United States Patent Application No. 09/655,482 filed on September 5, 2000, the disclosure of which is herein incorporated by reference) followed by washes of 0.5X SSC and 0.1 X SSC at room temperature.

Stringent assay conditions are hybridization conditions that are at least as stringent as the above representative conditions, where a given set of conditions are considered to be at least as stringent if substantially no additional binding complexes that lack sufficient complementarity to provide for the desired specificity are produced in the given set of conditions as compared to the above specific conditions, where by "substantially no more" is meant less than about 5-fold more, typically less than about 3-fold more. Other stringent hybridization conditions are known in the art and may also be employed, as appropriate. The array is incubated with the sample under appropriate array assay conditions, e.g., hybridization conditions, as mentioned above, where conditions may vary depending on the particular biopolymeric array and binding pair.

Once the incubation step is complete, the array is typically washed at least one time to remove any unbound and non-specifically bound sample from the substrate, generally at least two wash cycles are used. Washing agents used in array assays are known in the art and, of course, may vary depending on the particular binding pair used in the particular assay. For example, in those embodiments employing nucleic acid hybridization, washing agents of interest include, but are not limited to, salt solutions such as sodium, sodium phosphate (SSP) and sodium, sodium chloride (SSC) and the like as is known in the art, at different concentrations and which may include some surfactant as well.

Following the washing procedure, the array may then be interrogated or read to detect any resultant surface bound binding pair or target/probe complexes, e.g., duplex nucleic acids, to obtain signal data related to the presence of the surface bound binding complexes, i.e., the label is detected using colorimetric, fluorimetric, chemiluminescent, bioluminescent means or other appropriate means. The obtained signal data from the reading may be in any convenient form, i.e., may be in raw form or may be in a processed form.

As such, in using an array made by the preferred methods disclosed herein, the array will typically be exposed to a sample (for example, a fluorescently labelled analyte, e.g., protein containing sample) and the array then read. Reading of the array to obtain signal data may be accomplished by illuminating the array and reading the location and intensity of resulting fluorescence (if such methodology was employed) at each feature of the array to obtain a result. For example, an array scanner may be used for this purpose that is similar to the Agilent MICROARRAY SCANNER available from Agilent Technologies, Palo Alto, CA. Other suitable apparatus and methods for reading an array to obtain signal data are described in United States Patent Application Serial Nos: Serial No. 09/846125 "Reading Multi-Featured Arrays" by Dorsel et al.; and Serial No. 09/430214 "Interrogating Multi-Featured Arrays" by Dorsel et al., the disclosures of which are herein incorporated by reference. However, arrays may be read by any other method or apparatus than the foregoing, with other reading methods including other optical techniques (for example, detecting chemiluminescent or electroluminescent labels) or electrical techniques (where each feature is provided with an electrode to detect hybridization at that feature in a manner disclosed in US-A-6,221,583, the disclosure of which is herein incorporated by reference, and elsewhere).

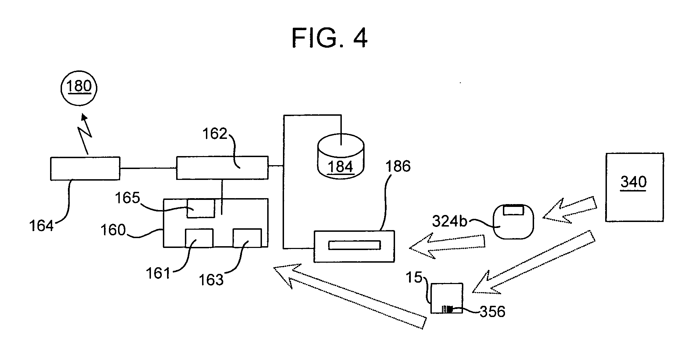

One such system for reading an array produced according to the preferred methods is shown in Figure 4, which illustrates an array reader at a single "user station", which may (but not necessarily) be remote from the fabrication station of Figure 3 (usually the user station is at the location of the customer which ordered the fabricated, received array). The user station includes a processor 162, a memory 184, a scanner 160 which can read an array, data writer/reader 186 which may be capable of writing/reading to the same type of media as writer/reader 326), and a communication module 164 which also has access to communication channel 180. Processor 162 is programmed to perform all the functions required of it. Scanner 160 may include a holder 161 which receives and holds an array assembly, as well as a source of illumination (such as a laser) and one or more light sensors 165 to read fluorescent light signals from respective features on the array as signal data which is obtained by processor 162 from the light sensor. Scanner 160 also includes a reader 163 to read a bar code 356 appearing on an array assembly 15. Processor 162 may also be capable of identifying signal data from read features of a same probe composition with different feature sizes, based on the read indication from a read bar code, and merging signal data from such.

Communication module 164 may be any type of suitable communication module, such as those described in connection with communication module 144. Memory 184 can be any type of memory such as those used for memory 141. Scanner 160 may be any suitable apparatus for reading an array, such as one which can read the location and intensity of fluorescence at each feature of an array following exposure to a fluorescently labelled sample. For example, such a scanner may be similar to the MICROARRAY SCANNER available from Agilent Technologies, Inc. Palo Alto, CA. Other suitable apparatus and methods are described in United States patent applications: Serial No. 09/846125 "Reading Multi-Featured Arrays" by Dorsel et al.; and US-A-6,406,849. The scanning components of scanner 160, holder 161, and reader 163 may all be contained within the same housing of a single same apparatus.

Regardless of the particular method and apparatus employed to read an array, information obtained from the array assay relating to the design of the array and/or information about a particular sample or target thereof may be incorporated into future array designs. Information such as the number of feature sizes, the sizes ofthe features, the compositions of the features, the distances between features, and the signals obtained from various array designs may be used to make algorithms used in array fabrication more robust. The preferred algorithms may be iterated, each time changing one or more of the array design parameters, e.g., based on previous array assay results, until the signals obtained from an array meets predetermined criteria such as design specifications and the like.

In certain embodiments, the results of the array reading (processed or not) may be forwarded (such as by communication) to a remote location if desired, and received there for further use (such as further processing). By "remote location" is meant a location other than the location at which the sample evaluation device is present and sample evaluation occurs. For example, a remote location could be another location (e.g., office, lab, etc.) in the same city, another location in a different city, another location in a different state, another location in a different country, etc. As such, when one item is indicated as being "remote" from another, what is meant is that the two items are at least in different buildings, and may be at least one mile, ten miles, or at least one hundred miles apart. "Communicating" information means transmitting the data representing that information as electrical signals over a suitable communication channel (for example, a private or public network). "Forwarding" an item refers to any means of getting that item from one location to the next, whether by physically transporting that item or otherwise (where that is possible) and includes, at least in the case of data, physically transporting a medium carrying the data or communicating the data. The data may be transmitted to the remote location for further evaluation and/or use. Any convenient telecommunications means may be employed for transmitting the data, e.g., facsimile, modem, Internet, etc.

As noted above, the arrays produced according to the preferred methods may be employed in a variety of array assays including hybridization assays. Specific hybridization assays of interest which may be practiced using the subject arrays include: gene discovery assays, differential gene expression analysis assays; nucleic acid sequencing assays, and the like. Patents describing methods of using arrays in various applications include: 5,143,854; 5,288,644; 5,324,633; 5,432,049; 5,470,710; 5,492,806; 5,503,980; 5,510,270; 5,525,464; 5,547,839; 5,580,732; 5,661,028; 5,800,992; the disclosures of which are herein incorporated by reference.

Other array assays of interest include those where the arrays are arrays of polypeptide binding agents, e.g., protein arrays, where specific applications of interest include analyte detection/proteomics applications, including those described in United States Patent Nos.: 4,591,570; 5,171,695; 5,436,170; 5,486,452; 5,532,128; and 6,197,599; as well as published PCT application Nos. WO 99/39210; WO 00/04832; WO 00/04389; WO 00/04390; WO 00/54046; WO 00/63701; WO 01/14425; and WO 01/40803; the disclosures of which are herein incorporated by reference.

For example, embodiments may include using an array prepared according to the preferred methods (e.g., an array having two or more different sized features) at the user station of Figure 4, by receiving a package 340 from the remote fabrication station and opening it to retrieve the prepared array and portable storage medium 324b (if present in package 340). Sample, for example a test sample, may be exposed to the one or more received arrays in a known manner under known conditions. Apparatus and procedures for hybridization are described, for example, in US-A-6,258,593 and US-A-6,399,394, the disclosures of which are herein incorporated by reference. Following hybridization and washing, the array may then be inserted into holder 161 in scanner 160 and read by it to obtain read results (such as signal data representing the fluorescence pattern on the array 12). The reader 163 in scanner 160 may also read the identifier 356 in association with the corresponding array, while the array is still positioned in retained in holder 161 or beforehand. Using identifier 356, processor 162 may then retrieve the characteristic data such as the sizes of the features and, e.g., the relative addresses and compositions thereof, for one or more of the arrays from portable storage medium 324b or from the database of such information in memory 141.

The resulting retrieved characteristic data for an array, e.g., feature sizes, may be used to either control reading of the array or to process information obtained from reading the array. For example, the customer may decide (through providing suitable instructions to processor 162) that a particular feature need not be read or the data from reading that feature may be discarded, since the polynucleotide sequence at that feature is not likely to produce any reliable data under the conditions of a particular sample hybridization.

### Computer Readable Medium Having an Algorithm Stored thereon

Also provided within the teachings herein are algorithms stored on computer readable medium. The subject algorithms may be employed in the practice of the preferred methods. For example, embodiments include algorithms for preparing an array in accordance with the subject invention, e.g., receiving information about feature sizes and/or particular samples to be used with the array and determining appropriate array parameters such as applied activation signal for each ejector based on this information and/or directing a fluid drop deposition device to fabricate an array according to such information, e.g., by applying suitable waveforms to each ejector based on the desired feature sizes.

More specifically, arrays may be designed manually or with the assistance of a computing means, in which an algorithm is employed that is capable of directing suitable software/hardware means to prepare an array with respect to the desired feature sizes of the array, e.g., based on the amount of target present or at least suspected of being present in a sample. Typically, the algorithm is recorded on a computer readable storage medium, where such media are well known to those of skill in the art. More specifically, one or more aspects of the teachings herein may be in the form of computer readable media having an algorithm, e.g., computer programming, stored thereon for implementing some or all of the subject methods. For example, the sizes of the features and/or corresponding applied activation signals to provide certain feature sizes of an array may be determined using an algorithm in conjunction with a computational analysis system.

Accordingly, embodiments of the subject invention include computer readable media having programming (also known as computer control logic) stored thereon for implementing the steps required to determine the appropriate waveform for each ejector of a deposition head, e.g., prior to activation of the ejector and in certain embodiment prior to each activation. The computer readable media may be, for example, in the form of a computer disk or CD, a floppy disc, a magnetic "hard card", a server, or any other computer readable media capable of containing data or the like, stored electronically, magnetically, optically or by other means. Stored programming may be transferred to a computer such as a personal computer (PC), (i.e., accessible by a researcher or the like), or to an array fabrication device such as a fluid deposition device by physical transfer of a CD, floppy disk, or like medium, or may be transferred using a computer network, server, or other interface connection, e.g., the Internet.

In certain embodiments, the system may include a computer or the like with a stored algorithm capable of carrying out array design methods, i.e., a computational analysis system. In certain embodiments, the system may be also be provided with a user interface, where the user interface presents to a user the option of selecting among one or more different, including multiple different, inputs, e.g., various parameter values for the algorithm. Computational systems that may be readily modified to become systems as taught herein include those described in United States Patent No. 6,251,588; the disclosure of which is herein incorporated by reference.

### KITS

Finally, kits are also envisaged. The preferred kits may include one or more chemical arrays fabricated in accordance with the preferred methods. Arrays present in a kit may have at least two features that differ at least in size. The different sized features may or may not differ in composition.

The kits may further include one or more additional components necessary for carrying out an analyte detection assay, such as sample preparation reagents, buffers, labels, and the like. As such, the kits may include one or more containers such as vials or bottles, with each container containing a separate component for the assay, and reagents for carrying out an array assay such as a nucleic acid hybridization assay or the like. The kits may also include a denaturation reagent for denaturing the analyte, buffers such as hybridization buffers, wash mediums, enzyme substrates, reagents for generating a labelled target sample such as a labelled target nucleic acid sample, negative and positive controls. In addition to one or more chemical arrays, the subject kits may also include written instructions for using the chemical arrays in array assays such as hybridization assays or protein binding assays. The instructions may be printed on a substrate, such as paper or plastic, etc. As such, the instructions may be present in the kits as a package insert, in the labelling of the container of the kit or components thereof (i.e., associated with the packaging or sub-packaging) etc. In other embodiments, the instructions are present as an electronic storage data file present on a suitable computer readable storage medium, e.g., CD-ROM, diskette, etc. In yet other embodiments, the actual instructions are not present in the kit, but means for obtaining the instructions from a remote source, e.g. via the Internet, are provided. An example of this embodiment is a kit that includes a web address where the instructions can be viewed and/or from which the instructions can be downloaded. As with the instructions, this means for obtaining the instructions is recorded on a suitable substrate.

The subject kit may also include one or more algorithms, as described above, present on computer readable medium, or means for accessing such algorithms such as means for obtaining the algorithms from a remote source, e.g. via the Internet. Databases may also be provided, e.g., on a computer readable medium. These databases may include a population of different waveforms and corresponding feature sizes and/or droplet sizes. Reagents for fabricating a chemical array as taught herein may also be provided in a subject kit e.g., one or more of: biopolymers or precursors thereof, buffers, activator fluid, capping fluids, and the like. As such, the kits may include one or more containers such as vials or bottles, with each container containing a separate component for an array fabrication protocol.

In many embodiments of the subject kits, the components of the kit are packaged in a kit containment element to make a single, easily handled unit, where the kit containment element, e.g., box or analogous structure, may or may not be an airtight container, e.g., to further preserve the one or more chemical arrays and reagents, if present, until use.
It is evident from the above results and discussion that the above-described teachings provide methods and devices that can precisely control the amount of fluid dispensed from each orifice of a fluid deposition device. Accordingly, methods and devices that are capable of fabricating chemical arrays having different sizes are provided.

The disclosures in United States patent application no. 10/828,357, from which this application claims priority, and in the abstract accompanying this application are incorporated herein by reference.

## Claims

1. A method of fabricating a chemical array, including the steps of:
(a) determining a chemical array layout in which each feature in said chemical array layout has a size that is chosen based on its composition; and
(b) fabricating said chemical array according to said chemical array layout.

2. A method according to claim 1, wherein at least two features are of different sizes.

3. A method according to claim 1 or 2, wherein said at least two features are of the same probe composition.

4. A method according to claim 1 or 2, wherein said at least two features are of different probe compositions.

5. A method according to any preceding claim, wherein said fabricating is accomplished with a fluid drop deposition device.

6. A method according to claim 5, wherein said fluid drop deposition device comprises at least one deposition head and said fabricating comprises modulating the applied activation signal for each ejector of said at least one deposition head to produce said features.

7. A method of fabricating a chemical array with multiple features of different sizes, including the steps of:
modulating a waveform provided to at least one orifice ejector based on said chemical array feature sizes to dispense volumes of fluid from an orifice associated with said at least one orifice ejector, wherein said volume dispensed is based on said modulated waveform provided to said orifice ejector.

8. A method according to claim 7, wherein said method includes providing a first modulated waveform based on a feature size of a first feature and second modulated waveform based on a feature of a second feature to said at least one ejector orifice.

9. A method according to claim 8, wherein said first and second modulated waveforms are provided to the same orifice ejector which is associated with a single orifice, whereby said volume of fluid for said first feature and said volume of fluid for said second feature are both dispensed from said single orifice.

10. A method according to claim 8, wherein said first and second modulated waveforms are provided to different orifice ejectors associated with different orifices, whereby said volume of fluid for said first feature and said volume of fluid for said second feature are dispensed from different orifices.

11. An algorithm for practicing the method according to any preceding claim, wherein said algorithm is recorded on a computer readable medium.

12. Apparatus for fabricating a chemical array, wherein said apparatus is capable of fabricating a chemical array wherein all of the features of said chemical array differ in size.
